# EUROPEAN PATENT SPECIFICATION

(11) **EP 1 318 634 B1**
(45) Date of publication and mention of the grant of the patent: **02.08.2006**
(21) Application number: 03100068.0
(22) Date of filing: 16.02.2001
(51) Int. Cl.: H04L 12/56

(54) **Communications system with half rate data channels**
Kommunikationssystem mit halbraten Datenkanälen
Système de télécommunication avec des canaux a demi-debit

(30) Priority: 18.02.2000 GB 0003892; 23.02.2000 FI 20000415; 21.12.2000 GB 0031296
(43) Date of publication of application: 11.06.2003
(62) Divisional of application: 01919304.4
(73) Proprietor: Nokia Corporation, 02150 Espoo (FI)
(72) Inventor: Sebire, Benoist, FIN-02100 Espoo (FI); Hakaste, Markus Tapani, FIN-00200, Helsinki (FI); Parantainen, Janne, FIN-00180, Helsinki (FI); Bellier, Thierry, 2720 Vanlose (DK); Nikula, Eero, FIN-02280 Espoo (FI)
(74) Representative: Slingsby, Philip Roy

(56) References cited:
- WO-A-99/48317
- US-A- 5 465 269
- US-A- 5 966 374
- IVANOVICH M ET AL: "CHANNEL ALLOCATION METHODS FOR HALF AND FULL RATE CONNECTIONS IN GSM" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 3, 23 June 1996 (1996-06-23), pages 1756-1760, XP000625108 ISBN: 0-7803-3251-2

## Description

The present invention relates to radio access bearers which are aligned with both the GSM/EDGE RAN (GERAN) and UMTS RAN (UTRAN).

Broadly speaking telecommunications services are divided into two categories these are bearer services and tele services. Bearer services allow a user to access various forms of communications such as asynchronous circuit switched data service interworking with the public switched telephone network (PSTN) or packet switched synchronous data service interworking with the packet switched public data network (PSPDN). Tele services on the other hand allow a user to access various forms of applications such as transmission of speech, short messaging services and facsimile transmissions. Such bearer services are currently adopted in the universal mobile telecommunications system (UMTS). This UMTS network is composed of four sub-networks the access network, the core network, service mobility control network and the telecommunication management network. Of these the access network is responsible for basic transmission and switching functions required to enable a mobile station (MS) to access a fixed network resource over the radio interface (Uₘ interface).

Bearer services (bearers) which allow a user to access various forms of communication over the UMTS radio access network (RAN) are already well defined.

An alternative to the UTRAN is GERAN. As GERAN develops new radio access bearers are defined. Since the GERAN will connect to a core network common with UMTS it is required that the bearers offered by GERAN are aligned with those of UTRAN. The following traffic classes are then to be supported in order to fulfil the service requirement. These traffic classes are the types of traffic which will occur over the RAN between the access network and the core network of the mobile telephone system.

### Conversational Traffic

Real time conversation schemes are characterised by the fact that the transfer time must be low because of the conversational nature of the scheme and the at the same time that the time relation (variation) between information entities of the stream must be preserved in the same way as for real time streams. Therefore the limit for acceptable transfer delay is very strict since failure to provide low enough transfer delay will result in an unacceptable lack of quality. The transfer delay requirement is therefore both significantly lower and more stringent than the roundtrip delay of the interactive traffic case set out below.

### Streaming Traffic

This one way scheme is characterised by the fact that the time relations (variation) between information entities (i.e. samples, packets) within a flow must be preserved, although it does not have any requirements on low transfer delay. The delay variation of the end to end flow must be limited, to preserve the time relation (variation) between information entities in the stream.

### Interactive Traffic

When the end-user is online requesting data from remote equipment this scheme applies. Interactive traffic is characterised by the request response pattern of the end-user. At the message destination there is an entity expecting the message (response) within a certain time. Roundtrip delay time is therefore one of the key attributes. Another characteristic is the fact that the content of the packets must be transparently transferred (with low bit error rate).

### Background Traffic

When the end-user sends and receives data files in the background this scheme applies. Examples are background delivery of emails, SMS, download of databases and reception of measured records. Background traffic is characterised by the fact that the destination is not expecting the data within a certain time. This scheme is thus more or less delivery time insensitive. Another characteristic is that the content of the packet must be transparently transferred (with low bit error rate).

The main distinguishing factor between these various traffic classes is how delay sensitive the traffic is. Conversational class traffic is meant for traffic which is delay sensitive while background class traffic is the most delay insensitive traffic class. Conversational and streaming classes are mainly intended to be used to carry real time traffic flows. Interactive class traffic and background traffic are mainly meant to be used by traditional internet applications like WWW, email, telnet, FTP and news. Due to looser delay requirements compared between conversation and streaming classes both provide better error rates by means of channel coding and retransmissions. These traffic classes are further detailed in UMTS 23.107.

In view of the common usage of the UMTS core network in the communication protocols used to create GERAN, radio access bearers should also be built as in UMTS where combinations of different modes of protocols in one single stack provide a large set of bearers.

Communication protocols are the sets of rules which users adopt when establishing services and transferring data. Protocols permit the setting up and management of connections and are also needed to enable reliable communications. The functions which are provided by the communication protocols are well described but their implementation is not. A model which describes the functions provided by the communication protocols contains several layers. These are called protocol stacks.

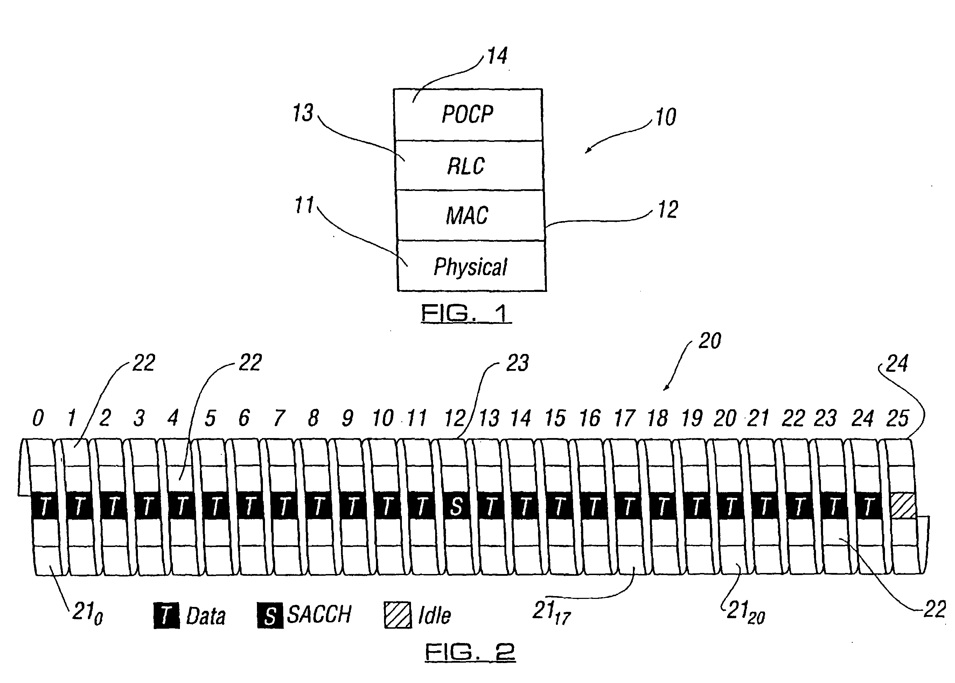

Figure 1 shows a user plane protocol stack 10 suitable for use with the GERAN in which each layer includes different modes. The stack includes a physical layer 11 which is analogous to the physical layer of a UMTS access network protocol stack, a media access control (MAC) layer 12 which corresponds to the data link layer of a standard UMTS stack, a radio link control (RLC) layer 13 corresponding to the UMTS stack network layer and a packet data convergence protocol (PDCP) layer 14 corresponding to the application layer of the UMTS stack model.

If the MS is not fully internet protocol (IP) based or it is desired to use GSM circuit mode one element will have to take care of translation of circuit mode data to/from IP/User Datagram Protocol (UDP)/Real Time Protocol (RTP) packets and translation of 04.08 signalling to/from some IP-based signalling (e.g. H.323). Such a function is most probably only required for conversational and streaming traffic classes. Consider an example, where a data spurt is transmitted between the endpoints of a connection in data packets. The data blocks produced by an application can be encapsulated into data packets of certain transmission protocols. The Real Time Protocol (RTP) is an example of a packet data protocol that can be used for applications which do not tolerate delays. The data blocks are encapsulated into RTP protocol packets by placing the data blocks themselves into a payload of the packets and by adding suitable headers to the data blocks. Some protocols may need some information also in the end of the protocol packet.

The RTP data packets may be transmitted using User Datagram Protocol (UDP), which may be run on Internet Protocol (IP). UDP and IP add their own headers to the data packets. The data packet delivered to a link layer protocol therefore typically consists of the original payload and many headers. The link layer protocol may perform header stripping for example the protocol headers typically contain various fields, whose content does not change from packet to packet. The result of the header stripping is called header stripping residue, and it is the information that needs to be transmitted for a certain packet or group of packets to allow the receiving end to construct the packet headers again. The header stripping can be performed on each data packet similarly, or it maybe performed, for example, on the first data packet and then the content of the headers of the next data packets is determined using the information of the headers of the first data packet.
For the protocol combination RTP/UDP/IP the header stripping result typically contains at least the sequence number (SN) of the RTP packet, the time stamp (TS) of the RTP packet and the marker (M) bit of the RTP packet. It is possible that only a certain offset of these needs to be transmitted for updating. Information related to the UDP and IP headers can be determined straightforwardly after the first UDP/IP packets of the connection have been transmitted to the receiving end. Once the header stripping residue and the payload of the data packets are transmitted over the radio access network, a network element on the other side of the radio access network can reconstruct the RTP/UDP/IP packets using the header stripping residue and the transmitted payloads. Typically the protocol packets are transmitted without the headers over the ratio interface, the network element reconstructing the headers and protocol packet can be, for example, either a mobile station or a base station controller (BSC), depending on the transmission direction. Especially in a receiving mobile station, which typically does not forward the data packets to other network elements, the reconstruction of headers does not have to mean that a data structure corresponding to the header is constructed explicitly. It maybe enough that the header stripping residue and the payload of the data packet is forwarded via the IP/UDP protocol layer to RTP layer. In the IP/UDP layers, for example, only some counters related to the IP/UDP protocol packet sequence number may be incremented.
It would also be advantageous for several radio access bearers to be allowed which could be used simultaneously with single user equipment. This can be used to provide support for multiple quality of service (QoS) profiles in parallel. This helps maintain the communication quality under various traffic conditions.

A number of multiplexing scenarios must also be considered in providing radio access bearers for the GERAN. These are set out below.

### Operational Scenario 1 (OS1)

Permanent allocation of a channel to a voice call (conversational) without any multiplexing capability.

### Operational Scenario 2 (OS2)

Permanent allocation of a channel to a voice call (conversational traffic class) and multiplexing of best effort data from the same user (background traffic class).

### Operational Scenario 3 (OS3)

Permanent allocation of a channel to a voice call (conversational traffic class) and multiplexing of best effort data from different users (background traffic class).

### Operational Scenario 4 (OS4)

Allocation of a channel to more than one voice user (and/or data users) in a dynamic manner.

Various attempts have already been made to provide radio access bearers aligned with both GERAN and UTRAN. These systems have however suffered from a number of drawbacks.

One proposed solution provides a system which does not reuse circuit switched traffic channels. The distinguishing feature of a circuit switching system is the exclusive use of a channel of preset bandwidths which is dedicated to the use of two users for the duration of a call. For example in the radio access network of the Global System for Mobile communications (GSM) the bi-directional circuit switching channel is reserved for each call. The transmission capacity of the bi-direction channel is the same in both directions i.e. uplink and downlink. Since during a voice call channels are active for only about 40 to 50% of the time this is an inefficient use of the channel.

In addition no diagonal interleaving has been provided in the transfer of information. This reduces the effectiveness of error correcting codes and makes data loss more likely.

Furthermore proposed solutions do not provide a half-rate packet switched channel. Packet switching is based on the idea of message switching. A message or group of data is formed with a header and end-of-message portion. The message is stored in a buffer at each switch where the header is decoded and the next node in a route is determined. A half-rate packet switched channel allows each channel to be divided into two sub-channels thereby providing increased traffic potential. This makes use of so-called half-rate codecs (i.e. a codec giving toll quality speech at 8kb/s) which helps improve spectral efficiency or user density for the allotted channel spectrum.

In a similar manner no quarter rate circuit switched channel has been provided. This has the drawback that the advantages of quarter rate codecs which have been developed cannot be utilised.

Another drawback of prior systems has been the lack of associated control channel (ACCH) considerations. These control channels carry signalling or synchronisation data and are well known in telecommunications systems. Four categories of control channels are used. These are known as the broadcast control channel (BCCH), the common control channel (CCCH), the stand alone dedicated control channel (STDCCH) and the associated control channel (ACCH). These ACCHs will be described in more detail hereinbelow.

It is therefore an object of the present invention to provide GERAN radio access bearers which at least partly accommodate the requirements listed above. Advantageously the present invention has as a further object to at least partly avoid the drawbacks provided by other prior GERAN radio access bearers.

WO 00/01186 discloses a method for allocating channels to packet switched connections in a mobile telecommunications system which supports both packet switched and circuit switched connections. All channels are initially allocated to circuit switched connections. If a connection for a packet switched connection is requested, then the channels are allocated according to the maximum number of time slots that may be allocated to packet switched connections. "The GSM System for Mobile Communications" , M. Mouly and M. Pautet, 1992, ISBN : 2-9507190-0-7, discloses a GSM system comprising half rate data channels for circuit switched communications.

According to a first aspect of the invention there is provided a communications system comprising a first station capable of communication with a second station over a wireless channel, data being carried over the wireless channel in superframes, each superframe comprising a plurality of frames and each frame comprising a plurality of timeslots, the system having a mode of operation in which a data channel for circuit switched communications is defined by the allocation to that channel of corresponding time slots of some of the frames of each superframe, and a data channel for packet switched communications is defined by the allocation to that channel of corresponding time slots of others of the frames of each superframe, characterised in that the data channel for circuit switched communications is a half rate data channel and the data channel for packet switched communications is a half rate data channel.

Preferably equal numbers of time slots in each frame are allocated to the data channel for circuit switched communications and the data channel for packet switched communications. Alternatively, half or a quarter of the number of slots that are allocated to the data channel for packet switched communications may be allocated to the data channel for circuit switched communications.

Control data for control of the data channel for packet switched communications is preferably carried by the data channel for circuit switched communications. That control data may be for control of transmission power and/or handover of the channel. The control data may comprise a fast access control channel and/or a slow access control channel.

The data channel for circuit switched communications may be a conversational channel. The data channel for circuit switched communications may be a background channel. The data channel for packet switched communications may be allocated time slots during periods when the data channel for circuit switched communications is relatively inactive, for example during lulls in speed data being carried by means of the data channel for circuit switched communications.

In the above aspects of the invention a data channel for circuit switched communications may carry data as a circuit switched connection or otherwise. The circuit switched channel is preferably capable of operation via a circuit switched core network of the communication system.

The half rate data channel for packet switched communications may be a streaming, interactive or background channel. The data channel for circuit switched communications may be a conversational channel.

A half rate data channel may be defined by the allocation to that channel of a time slot in alternate frames of the superframe.

The system may be operable according to the GSM specification or a derivative thereof, such as the GERAN system.

The wireless channel preferably carries data by means of 8-fold phase shift keyed modulation (8PSK).

According to a second aspect of the invention there is provided a mobile station capable of communicating data over a wireless channel, data being carried over the wireless channel in superframes, each superframe comprising a plurality of frames and each frame comprising a plurality of timeslots, the mobile station being arranged to transmit data for circuit switched communications over a data channel defined by the allocation to that channel of corresponding time slots of some of the frames of each superframe, and to transmit data for packet switched communications over a data channel defined by the allocation to that channel of corresponding time slots of others of the frames of each superframe, wherein the data channel for circuit switched communications is a half rate data channel and the data channel for packet switched communications is a half rate data channel.

The mobile station may be arranged to transmit data for packet switched communications during periods when the data channel for circuit switched communications is relatively inactive. The mobile station may be arranged to transmit data for packet switched communications during lulls in speech data being carried by means of the data channel for circuit switched communications.

The mobile station may be arranged to transmit data for circuit switched communication over a first sub-channel that comprises the half rate data channel for circuit switched communication and to transmit data for packet switched communication over a second sub-channel that comprises the half rate data channel for packet switched communication.

According to a third aspect of the invention there is provided a base station capable of communicating data over a wireless channel, data being carried over the wireless channel in superframes, each superframe comprising a plurality of frames and each frame comprising a plurality of timeslots, the base station being arranged to transmit data for circuit switched communications over a data channel defined by the allocation to that channel of corresponding time slots of some of the frames of each superframe, and to transmit data for packet switched communications over a data channel defined by the allocation to that channel of corresponding time slots of others of the frames of each superframe, wherein the data channel for circuit switched communications is a half rate data channel and the data channel for packet switched communications is a half rate data channel.

The base station may be arranged to transmit data for packet switched communications during periods when the data channel for circuit switched communications is relatively inactive. The base station may be arranged to transmit data for packet switched communications during lulls in speech data being carried by means of the data channel for circuit switched communications.

The base station may be arranged to transmit data for circuit switched communication over a first sub-channel that comprises the half rate data channel for circuit switched communication and to transmit data for packet switched communication over a second sub-channel that comprises the half rate data channel for packet switched communication.

Embodiments of the present invention provide several advantages over prior solutions. Firstly the radio access bearers are compatible with and thereby fulfil the design requirements of release 2000. This represents the next generation of telecommunications networks.

Secondly the reuse of already specified channel coding of adaptive multi-rate (AMR) speech traffic channels for conversational traffic classes and circuit switched data traffic channels for streaming traffic classes is provided for.

Thirdly embodiments of the present invention allow circuit switched and packet switched channels to be multiplexed within the same time slot. This enables the conversational and interactive traffic classes to coexist within the same time slot.

Fourthly embodiments provided for a quarter rate circuit switched traffic channel thus taking advantage of quarter rate codecs which are available.

Fifthly embodiments of the invention allow for the reuse of already specified associated control channel of circuit mode (in particular slow associated control channels (SACCH) and fast associated control channels (FACCH) for conversational and streaming traffic classes.

Furthermore embodiments provide that when packet data of the same user is multiplexed within the silent periods of a speech traffic channel (conversational traffic class) the packet data will use for control the SACCH and FACCH channels of the speech traffic channel as well.

Still further embodiments provide half rate packet switched traffic channels to increase multiplexing capabilities.

Embodiments of the present invention will now be described hereinafter with reference to the following drawings in which:
Figure 1 shows a user plane protocol stack suitable for use in GERAN;
Figure 2 shows a full rate traffic channel;
Figure 3 shows a half rate traffic channel;
Figure 4 shows a quarter rate traffic channel;
Figure 5 illustrates FACCH mapping on full rate channels;
Figure 6 shows FACCH mapping on half rate channels;
Figure 7 shows FACCH mapping on quarter rate channels;
Figure 8 shows a full rate packet channel;
Figure 9 shows a half rate packet channel;
Figure 10 illustrates conversational radio access bearers;
Figure 11 illustrates streaming radio access bearers;
Figure 12 illustrates interactive radio access bearers; and
Figure 13 illustrates background radio access bearers.

In the drawings like reference numerals refer to like parts.

The protocols used to create the radio access bearers are built as in UMTS where combinations of different modes of protocols in one single stack provide a large set of bearers. The protocol stack to be used is depicted in Figure 1 each layer of which includes different modes. The different modes of each layer are identified below.

### Packet data convergence protocol (PDCP)

**Transparent** with removal of RTP/UDP/IP header. Bearer services can be transparent or non-transparent. Transparent services provide error protection only via forward error correction (FEC). On the other hand non-transparent services have the additional protection of automatic repeat request (ARQ). This is provided in the radio link protocol which gives improved data integrity.
**Non-Transparent with header adaptation** (header stripping or header compression).
**Non-transparent without header adaptation.**

### Radio Link Control (RLC)

**Transparent**
**Unacknowledged**
**Acknowledged**

### Media Access Control (MAC)

**Dedicated:** no user identification is included allowing only one user per channel. However whenever this continuous transmission (DTX) occurs, data packets from the same user can be transmitted. The function of the DTX is to suspend radio transmission during silence portions in a speech channel. Normally this is used to help prevent interference and increase capacity of the system. By transmitting data packets during the silent portions system capacity can be further increased.
**Shared:** the same channel can be shared between several users.

### Physical (PHYS)

**Modulation:** a modulation process is used to convert channel coded speech or data into a type suitable for transmission over the radio channel. Effectively modulation makes it possible to transmit binary information on analogue carriers. During modulation a bit or group of bits is translated into rapid changes in state such as changes in amplitude or frequency. Presently Gaussian minimum shift keying (GMSK) and eight phase shift keying (8PSK) are defined for use with the GERAN. Speech transmission uses only GMSK whereas data can be conveyed using 8PSK or GMSK modulation. In phase shift modulation the phase of a signal is shifted differently relatively to the previous phase (e.g. plus 90% for zero and plus 270% for one).
**Channel coding:** because of electromagnetic interference encoded speech and data signals transmitted over the radio interface must be protected from errors. Convolutional encoding and block interleaving are used to achieve this protection. In particular two different error protection mechanisms which perform convolutional encoding exist within the GSM specification. Unequal error protection (UEP) which treats the bits of a signal with different channel coding depending upon the class of bit (class 1a bits are most sensitive to bit errors, class 1b bits are moderately sensitive whilst class II bits are least sensitive to bit errors). Equal error protection (EEP) uses the same channel coding for all data information.
**Channel rate:** a traffic channel is used to carry the speech and data traffic. Traffic channels are defined using a 26 frame multi-frame as will be described in more detail herein after. Out of the 26 frames 24 are used for traffic. These are the full rate traffic channels. Some half rate and quarter rate channels are also provided. It will be understood that the present invention is not limited to frames and multi-frames of this configuration.
**Interleaving:** as mentioned above interleaving is used to protect data from errors occurring during transmission. After encoding interleaving steps are carried out to interleave the various signal bits with encoding indices to form an interleaved sequence. If an error occurs in part of that sequence the remainder can be utilised to reconstruct the correct data. Interleaving can be diagonal (diag) or rectangular (rect) and different interleaving depths can be used (19, 8, 4, 2). The higher the interleaving depth the better the link level performance however the longer the delay.

Radio access bearers according to the present invention are selected from among the combinations of the different layers on offer.

Mapping of the radio access bearers onto the physical layer can use two kinds of traffic channels as described above. These are the packet channels (PCH) and circuit switched channels (TCH). User data is not the only information which has to be carried through these channels over the air interface. Signalling messages must also be conveyed. These allow the network and MS to discuss the management of several issues such as resource and handover. When traffic is ongoing this signalling is done through the associated control channel (ACCH). However because of different requirements the way in which ACCHs are implemented differs for packet or circuit switched traffic channels. Various ACCHs are well defined for packet and circuit switched channels and some of these are identified and described below. In addition ACCHs for GERAN radio access bearers implemented in accordance with the present invention are described.

ACCHs are bi-directional channels. In the downlink they carry control commands from the base station to the mobile station (MS) to control its transmitted power level. In the uplink they carry the status of the MS to the base station. SACCH is used in signalling the layer at least for measurement results during transmission from the MS to the network. The SACCH has the particularity that continuous transmission must occur in both directions. For that purpose in the MS to network direction measurement result messages are sent at each possible occasion when nothing else has to be sent. Similarly system information type 5, 6 and optionally 5 bis and 5 ter messages as are known in the art are sent in the network to MS direction in UI frames when nothing else has to be sent. SACCH is used for non-urgent procedures, mainly for the transmission of the radio measurement data needed for handover decisions.

In every SACCH downlink block there exists ordered MS power level and ordered timing advance information. In every SACCH uplink block there exists actual MS power level and actual timing advance information.

In addition the SACCH conveys messages detailed in Annex A. Each SACCH block contains 184 information bits which are 456 bits encoded and interleaved over four bursts. One SACCH cycle is 480 ms. In other words the timing advance, power level and measurement reports can be updated every 480 ms. It will be understood that the present invention is not limited to blocks and bits of this configuration.

The FACCH (also known as main dedicated control channel (DCCH)) facilitates urgent action such as handover commands and channel reassignment in intracell handovers. It is transmitted by pre-empting half or all of the information bits of the bursts of the traffic channel (TCH) to which it is associated.

There are four alternative varieties of bursts used for transmission in GSMs. These are the normal burst, F burst, S burst and access burst. Of these the normal burst is used to carry data and most signalling. It has a total length of 156.25 bits consisting of two 57 bit information bits, a 26 bit training sequence used to synchronise the receiver with incoming information and to avoid the negative effects produced by multi-path propagation, 1 stealing bit for each information block (which indicates to the receiver whether information carried by a burst corresponds to traffic or signalling data), 3 tail bits at each end (used to cover the periods of ramping up and down of a mobile's power) and an 8.25 bit guard sequence (used to avoid a possible overlap of two mobiles during ramping time). FACCH is used for various purposes such as call establishment progress, handover, subscriber authentication, DTMF, notification (for VGCS and VBS - instead of NCH) and paging (instead of PCH).

FACCH can carry messages which are described in Annex A. Each FACCH block contains 184 information bits (or data bursts), these are 456 bits encoded as SACCH, the interleaving depending on its associated channel (full rate or half rate).

The enhanced fast associated control channel (E-FACCH) is a fast associated control channel introduced for ECSD. Each E-FACCH block contains the same information as FACCH (184 bits) and uses GMSK modulation. But the E-FACCH is mapped on full consecutive bursts instead of eight half bursts for FACCH in full rate.

The enhanced in-band associated control channel (E-IACCH) is the in-band E-TCH/F associated control channel introduced for the fast power control (FPC) in ECSD. The BSS indicates to the MS via the SACCH channel the use of the FPC. The power control information is sent every FPC reporting period of length 4TDMA frames (20 ms). The three information bits are coded into 24 bits which are mapped on the stealing symbols of four consecutive normal bursts.

Even if the fast power control is activated, the normal power control (via SACCH) is always running. However the MS then ignores the power level commands from SACCH.

The above-mentioned ACCHs are associated with circuit switched traffic channels. The following two ACCHs are associated with packet traffic channels.

Packet associated control channel (PACCH) conveys signalling information related to a given MS. The signalling information includes for example acknowledgements and power control information. The PACCH carries also resource assignment and reassignment messages, comprising the assignment of a capacity for PDTCHs and for further occurrences of PACCH. The PACCH shares resources with PDTCHs that are currently assigned to one MS. Additionally an MS that is currently involved in packet transfer can be paged for circuit switched services on PACCH. The messages which can be sent on a PACCH are listed in Annex A.

The PACCH is bi-directional. Each block contains 184 information bits which are 456 bits encoded and interleaved over four bursts (same coding as SACCH). Nevertheless PACCH does not have continuous transmission as SACCH does.

Because of this continuous transmission a continuous update timing advance mechanism has been defined in GPRS. The timing advance can be updated through a channel of its own. This is called the packet timing advance control channel (PTCCH). A MS in packet transfer mode will be regularly requested to send random access bursts to the uplink to allow estimation of the timing advance. PTCCH is then used in the downlink to transmit timing advance information updates to several MSs. Table 1 below sets out the various control channels.

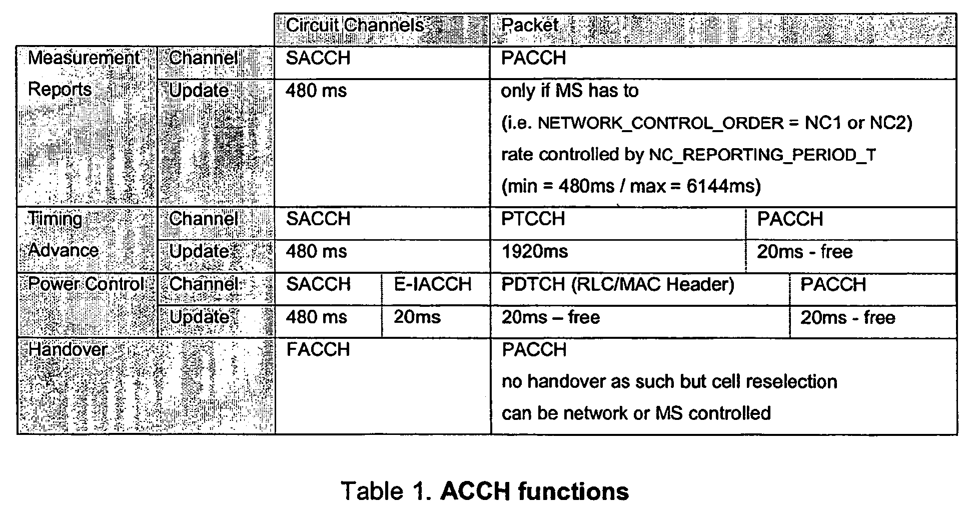

The table shows the associated control channels and update times for the various control procedures for both circuit switched and packet switched traffic channels.

In a manner somewhat similar to the above-mentioned existing examples GERAN radio access bearers make use of two different kinds of traffic channels. These are the circuit switched and packet switched channels.

Circuit switched channels can be used for streaming and conversational traffic classes where constant real time data flow is required. There is of course some difference between the delay requirements of these two classes as the streaming traffic type has more relaxed requirements. From the physical layer point of view it means that the streaming traffic type allows longer interleaving to be used.

The manner in which SACCH is mapped onto a physical channel does not depend upon the modulation used for data transfer neither upon traffic class. As mentioned above in respect of existing traffic channels (TCHs) the SACCH will be mapped over four GMSK bursts.

The proposed SACCH mapping is depicted in Figure 2 which follows well known mapping procedures. The data burst modulation can be either GMSK or 8PSK.

Figure 2 represents a multi-frame (or superframe) 20 which defines the full rate traffic channel (TCH/F). Each multi-frame comprises a group of 26 TDMA frames 21₀₋₂₅. Since the radio spectrum is a limited resource the bandwidth is divided up via frequency division multiple access (FDMA) and time division multiple access (TDMA) as is well known in the art. In particular FDMA involves the splitting by division of the 25 Mhz bandwidth into 124 carrier frequencies spaced 200 khz apart. Each of these is then divided in time via a TDMA scheme. The basic unit of time in the TDMA scheme is denoted as a burst period and lasts approximately 0.577 ms. Each TDMA frame 21₀₋₂₅ is divided into eight of these burst periods 22. Each TDMA frame 21₀₋₂₅ therefore consists of eight burst periods 22 which form a basic unit for logical channels. One physical channel is one burst period 22 per TDMA frame 21. The channels are defined by the number and position of that corresponding burst period. Throughout the following description the term "multi-frame" will be used and is to be understood as a superframe, that is, a frame made up of multiple TDMA frames. Likewise the phrase "burst period" will be understood to represent a timeslot in the TDMA frame.

Each of the eight burst periods 22 making up a TDMA frame comprises a 156.25 bit normal burst including two data bursts as described herein above.

Out of the 26 frames 21, 24 are used for traffic and can transmit data, one, the SACCH frame 23 is used for the SACCH. The final frame 24 is unused and is idle. In speech applications, the digitised speech is typically compressed using a certain speech coding method before it is transmitted over the radio interface. The amount of coded speech depends on the target speech quality and on the efficiency of the speech coding method. The coded speech is usually transmitted in speech frames, and a speech frame typically corresponds approximately to the duration of four TDMA frames. Within a full rate channel 6 speech frames (120ms) correspond to the duration of 26 TDMA frames (24 for speech + 1 for SACCH + 1 for Idle). The speech frames are channel coded with a suitable channel coding method; the choice of the channel coding method is usually affected by the transmission data rate of the communication channel reserved for the call. For full rate channel the number of bits of a channel coded speech frame is typically equal to or less than the number of bits carried by four radio bursts. Interleaving depth, which means over how many radio bursts a certain coded data frame is mapped, depends typically also on the transmission data rate of the communication channel.

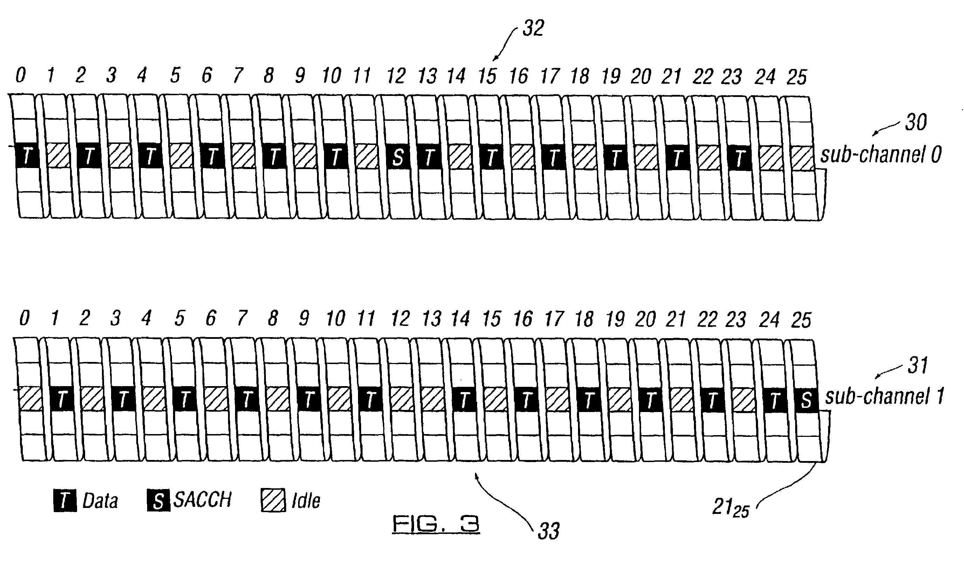

Known half rate traffic channels (TCH/H) are depicted in Figure 3 which also follows existing SACCH mapping. Two sub-channels 30, 31 are shown each provided via a respective multi-frame 32, 33. Each of these multi-frames (or superframes) includes 26 TDMA frames however the sub-channel in each is provided via a burst period (T) in every other TDMA frame 21. In this case the SACCH for the sub-channel 31 makes use of the 25^{th} frame 21₂₅ which would otherwise be idle.

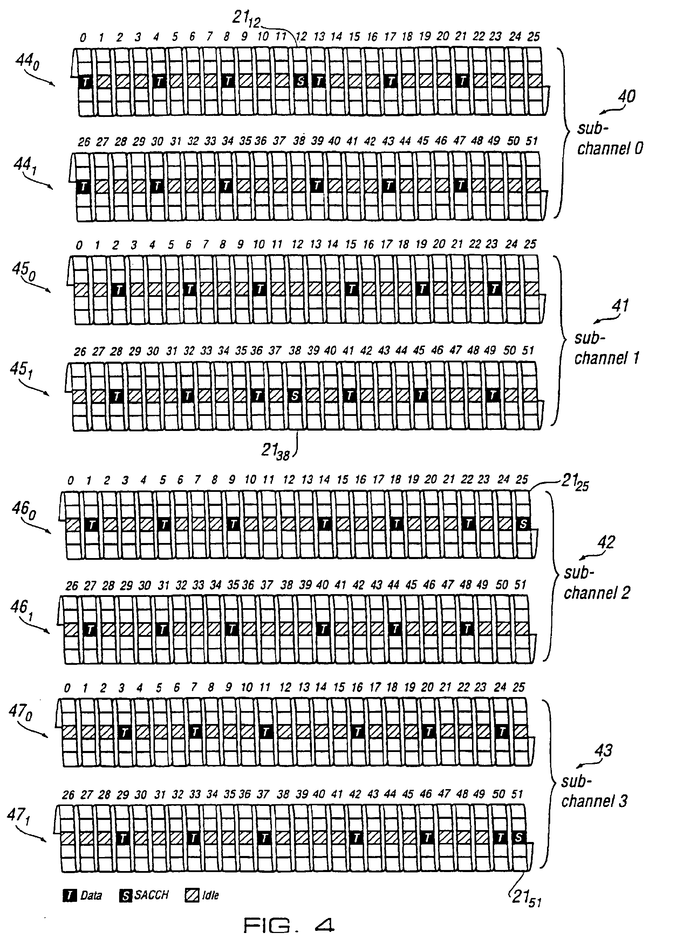

A quarter rate traffic channel (TCH/Q) for use with circuit switched traffic channels is depicted in Figure 4. Four sub-channels 40, 41, 42, 43 are provided each of which is formed by a burst period T approximately every fourth TDMA frame. In order to provide a SACCH for each of the sub-channels one burst period is reserved once in every two multi-frames. Because of this the conditions required in order to transmit a satisfactory data rate over the air interface makes use in indoor environments and microcells preferable. Of course it will be understood that the present invention is not limited to such environments. In such an environment the user mobility is naturally reduced and therefore the SACCH rate can be decreased without any harmful effect on performance.

As seen in Figure 4 the SACCH for sub-channel zero 40 is provided in TDMA frame 21₁₂ of multi-frame 44₀. The following multi-frame 44 of TDMA frames for that channel does not include a SACCH burst period. Likewise for sub-channel 1, 41 which is formed by multi-frames 45₀ and 45₁ which provide TDMA frames 0 to 51 the SACCH period is in TDMA frame 21₃₈. For sub-channel 2, 42 the SACCH period occurs at TDMA frame 21₂₅ of the multi-frame 46₀. There is no SACCH period required in multi-frame 46₁. In sub-channel 3, 43 the SACCH period occurs in TDMA frame 21₅₁ in the multi-frame 47₁. There is no SACCH period provided in the multi-frame 47₀.

The provision of these four sub-channels requires no extra TDMA frames to be allocated other than pre-existing SACCH and other idle channels.

Since FACCH is involved in delay sensitive mechanisms such as assignment, notification, paging, handover or even in the transmission of ETMF signals, delay requirements can not be relaxed. For instance even if handover probability is quite low (for example in a good environment and with a user having a reduced mobility), it does not mean that FACCH delays can be increased. Actually other mechanisms using FACCH still have to be carried out and longer delays could cause problems in such situations. Thus the FACCH is based on an existing stealing mechanism where the pre-emption can take place at two different levels. These are the frame level where each FACCH block replaces data frame(s) and the Burst level where each FACCH block replaces four consecutive data burst by four GMSK burst (in ECSD only)

The way traffic is effected depends on the interleaving used. In ECSD where relaxed delay requirements allow long interleaving, the stealing mechanism occurs at a burst level (four consecutive bursts stolen). Each data frame is then only slightly affected while the adjective fast of FACCH remains meaningful. When speech is carried the stealing mechanism occurs at a frame level. Data frame(s) are then simply lost.

Table 2 below makes a short comparison between the two stealing mechanism possibilities.

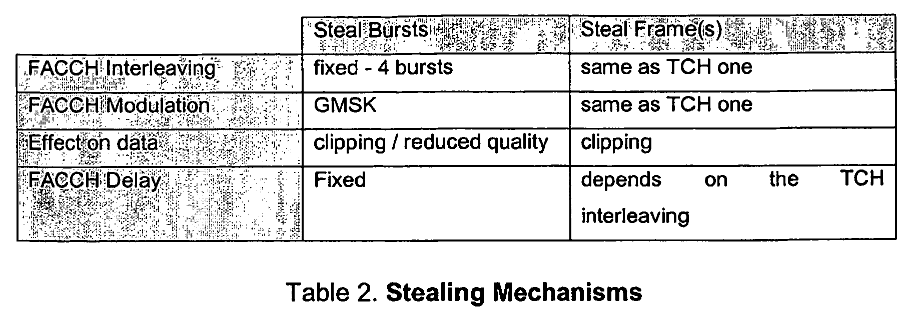

The method of providing the FACCH is dependent upon the type of channel from which the stealing mechanism operates. These will either be data channels or speech channels.

A full rate data channel could either use 8PSK or GMSK modulation. For both of them existing solutions are included in GSM specifications and therefore are reused for GERAN. Note that when 8PSK modulation is used, the question which modulation to use to transmit FACCH arises. ECSD studies have shown that taking into account the performance results and the robustness of the FACCH identification the preferred solution is to map the FACCH over four full consecutive GMSK bursts.

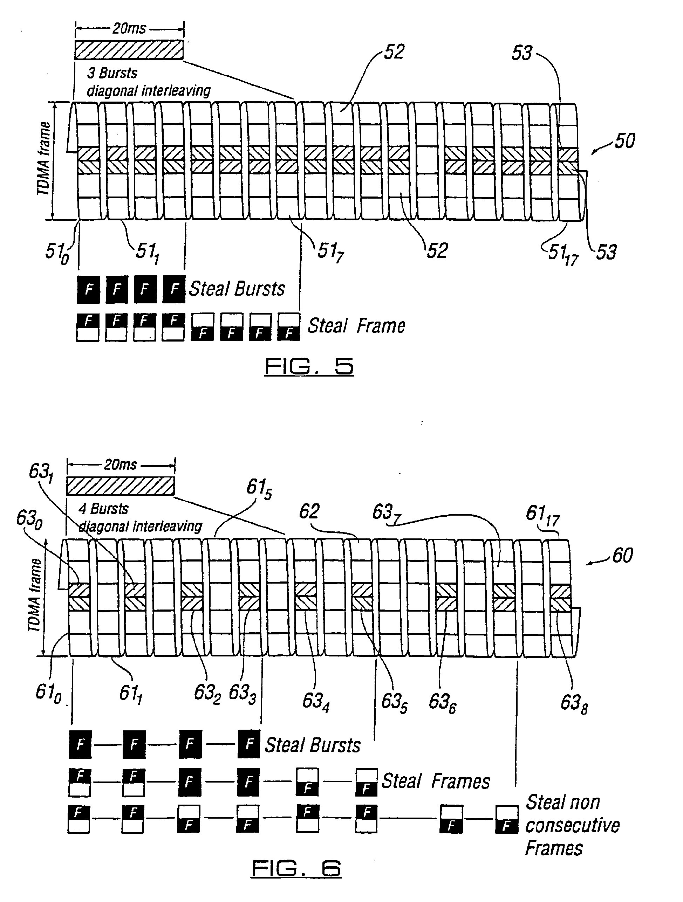

A half rate data channel can only use GMSK modulation in order to reuse existing solutions included in GSM specifications. New 8PSK half rate data channels could be used but are not preferable. On the other hand a full rate speech channel can either use 8PSK or GMSK modulation. For GMSK modulation the FACCH mapping follows existing solutions described in GSM specifications (stealing frames). For 8PSK modulation the stealing mechanism can take place at two different levels (burst or frame) as shown in Figure 5. A comparison of both mechanisms is made in Table 3.

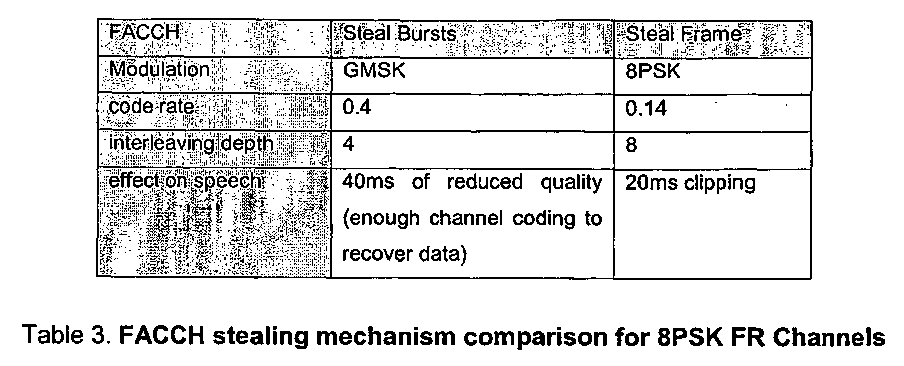

Figure 5 shows a part of multi-frame 50 for a full rate speech channel which consists of consecutive TDMA frames 51₀₋₁₇. Each formed by eight burst periods 52 or timeslots. Each burst period consists of 156.25 bit as described above. These include two 57 bit information bits otherwise known as two 57 bit frames 53 or data bursts. Thus each timeslot 52 includes two 57 bit data bursts 53 each positioned at a corresponding portion of the timeslot 52. Put another way each 156.25 bit burst period includes two 57 bit frames 53. When an urgent action requires rapid handover or channel reassignment the FACCH can either steal four consecutive burst periods in order to provide the data to control such urgent action or can steal eight bit frames from consecutive burst periods. In the case of stealing bit frames a diagonal interleaving policy is adopted to maintain information integrity. By stealing bit frames (or data bursts) rather than whole burst periods (or time slots) in this way the effect of audible speech being transferred on the open channel can be minimised as may be seen more clearly in Table 3.

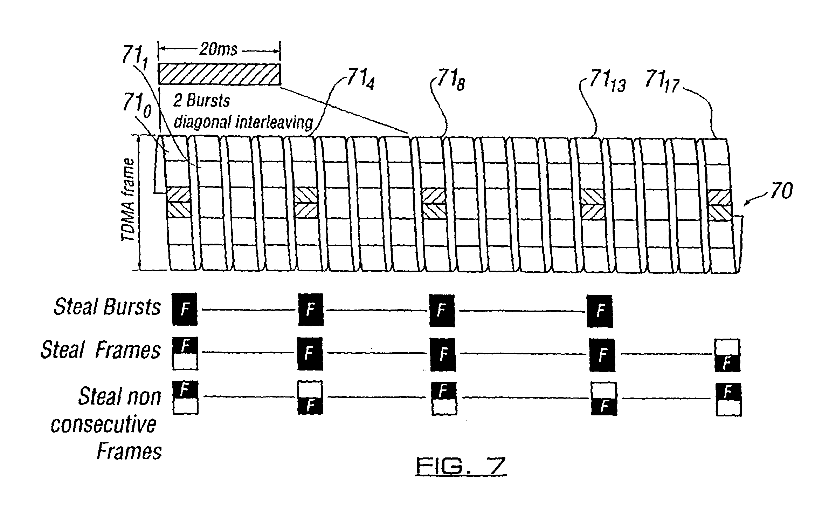

Figure 6 illustrates a stealing mechanism for use with a half rate speech channel. For such a channel either 8PSK or GMSK modulation techniques are available. For GMSK modulation FACCH mapping can follow existing mapping solutions as described in GSM specifications as is well known.

For 8PSK modulation the stealing mechanism necessary to provide the FACCH can take place at two different levels (burst or bit frame) as shown in Figure 6. Figure 6 shows a part of multi-frame 60 consisting of a stream of consecutive TDMA frames 61₀₋₁₇ each of which includes eight burst periods 62 (or time slots). For a half rate channel the channel will be divided into sub-channels each of which sub-channels will consist of burst periods in the same time slot in approximately every other TDMA frame. In Figure 6 the channel transfers speech using the burst periods 61₀₋₈. When an urgent action occurs which requires rapid handover or channel reassignment the FACCH can optionally steal four consecutive bursts 63₀₋₀ on consecutive frames or non-consecutive frames. In stealing consecutive bit frames the two frames from each of two consecutive burst periods are utilised. In the case of stealing frames a diagonal interleaving policy is adopted where possible. Table 4 shows the effects on speech of the three separate stealing mechanism and also sets out their other characteristics.

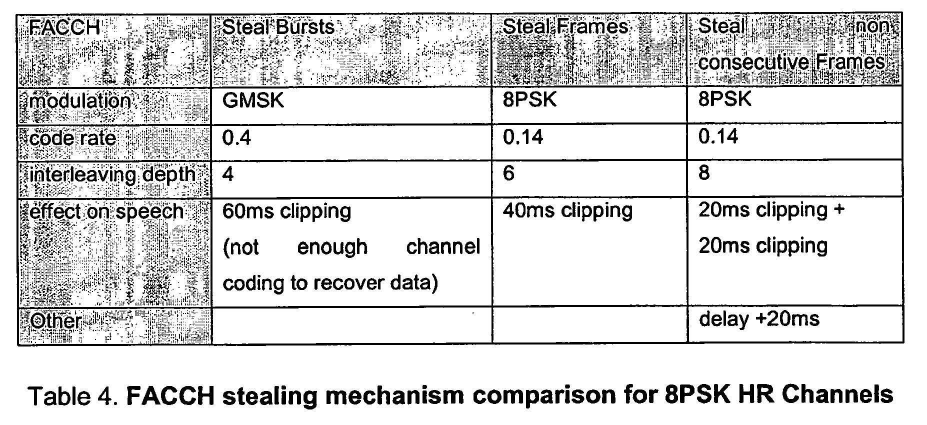

Figure 7 illustrates the stealing mechanism for a quarter rate speech channel. The preferable modulation which fits two quarter rate channels is the 8PSK modulation. The stealing mechanism can take place at two different levels (burst or frame) as shown in Figure 6. In order to increase the interleaving depth (thus link level performance) one solution to consider is to steal two non-consecutive frames. A comparison of the three mechanisms is made in Table 5.

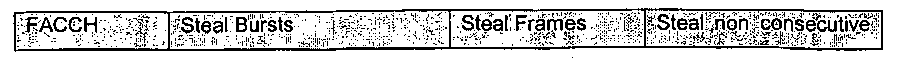

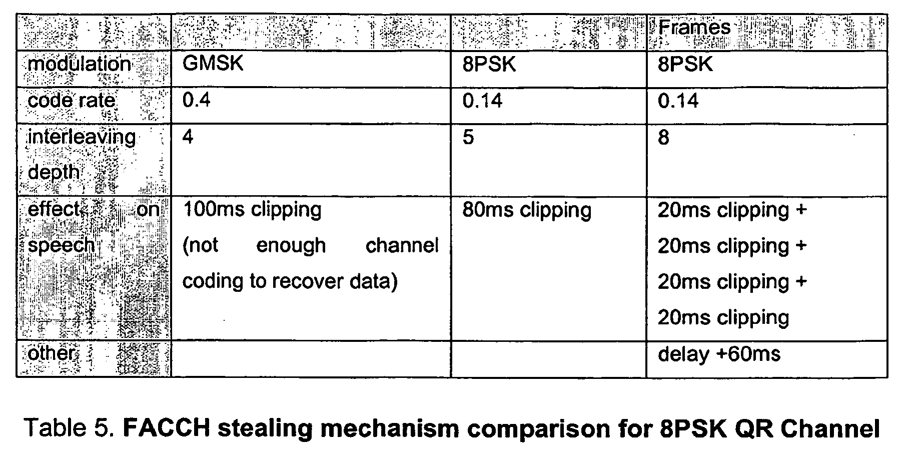

Figure 7 shows a part of multi-frame 70 which is part of an ongoing information stream carrying speech traffic. The multi-frame consists of a stream of consecutive TDMA frames 71₀₋₁₇. For a quarter rate channel the channel will be divided into sub-channels each consisting of burst periods in the same time slot in approximately every fourth TDMA frame (in fact in TDMA frames 71_{0,4,8,13,17}. When an urgent action necessitates rapid handover or channel reassignment the FACCH can optionally steal four consecutive bursts from the sub-channel (i.e. the burst periods from TDMA frame 71_{0,4,8,13}) or consecutive frames from the consecutive burst periods (i.e. the second frame from the burst period in TDMA frame 71₀, both frames from the burst periods in TDMA frame 71_{4,8,13}, and the first frame from the burst period in TDMA frame 71₁₇ or non-consecutive frames from consecutive burst periods (which would require more TDMA frames than shown in Figure 7). Effects and characteristics provided by the FACCH stealing mechanism for the quarter rate speech channel are shown in Table 5.

ACCHs associated to packet traffic channels (PACCH) differ from ACCHs associated to circuit switched traffic channels. The PACCH requires explicit resources allocation while SACCH is implicitly given one time slot every 120 ms (26 TDMA frames). Besides there is no FACCH approach needed since every single packet can carry either user data or signalling, the different being made through the RLC/MAC headers.

For background and interactive traffic classes where no real time constant data flow is needed PACCH blocks can be inserted anywhere. But when it comes to conversational and streaming traffic classes a constant data flow is required. Unfortunately because of the 52 multi-frame structure the mapping of such traffic type will not provide any free block for PACCH purposes. As an example consider a full rate speech packet traffic channel. On one hand every 52 TDMA frames 12 block are available. On the other hand every 52 TDMA frames (240 ms) 12 speech frames (20 ms) need to be transmitted. Therefore each block shall carry one speech frame. Consequently there is no block available for ACCH. The same occurs when two half rate packet voice users are multiplexed on the same packet traffic channel.

However the timing advance and power control mechanisms do not use the PACCH. In addition since the cell reselection can be MS controlled it is not always necessary to transmit measurement reports in the uplink. One option is therefore a mechanism by which an MS sends a list of desired cell candidates only when handover is required. Consequently a PACCH rate as high as one in every 480 ms may not be needed in packet mode. Thus for the conversational and streaming traffic classes the PACCH should be able to steal one speech block when needed. In order to reduce the effects on the end user perceived quality, PCU could try to fill silent periods with PACCH blocks.

Nevertheless it is awkward to always have to steal voice packets in order to transmit control information. Therefore for conversational and streaming traffic classes the circuit switched approach should be followed as described hereinbelow.

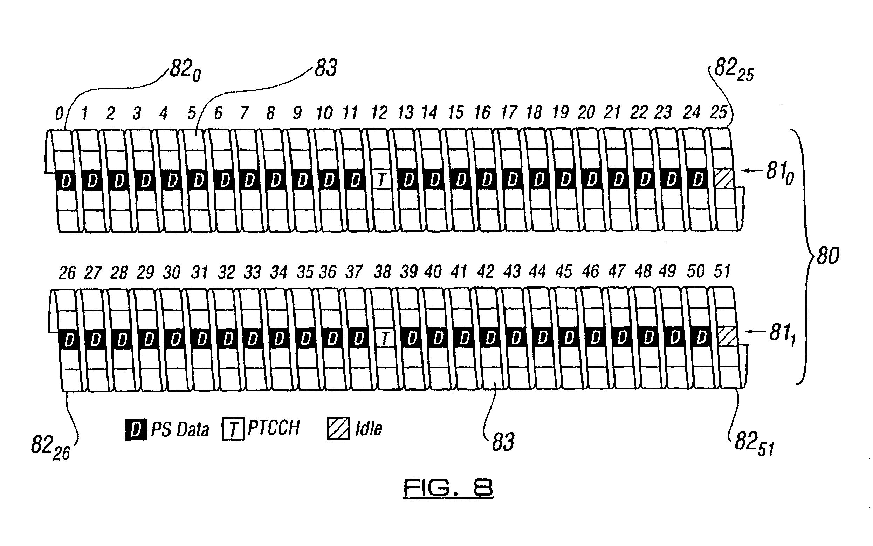

Figure 8 shows a full rate packet channel (PCH/F) 80 which consists of two multi-frames 81_{0.1}. Each multi-frame includes 26 TDMA frames 82₀₋₂₅ and 82₂₆₋₅₁. Each of the TDMA frames includes eight burst periods which are used to carry data (D). A data channel is provided by a corresponding burst period in each of the TDMA frames. In each multi-frame 24 TDMA frames are used to transfer packet switched data D. One TDMA frame is used as the packet switched traffic control channel (PTCCH) whilst the remaining burst period is left idle.

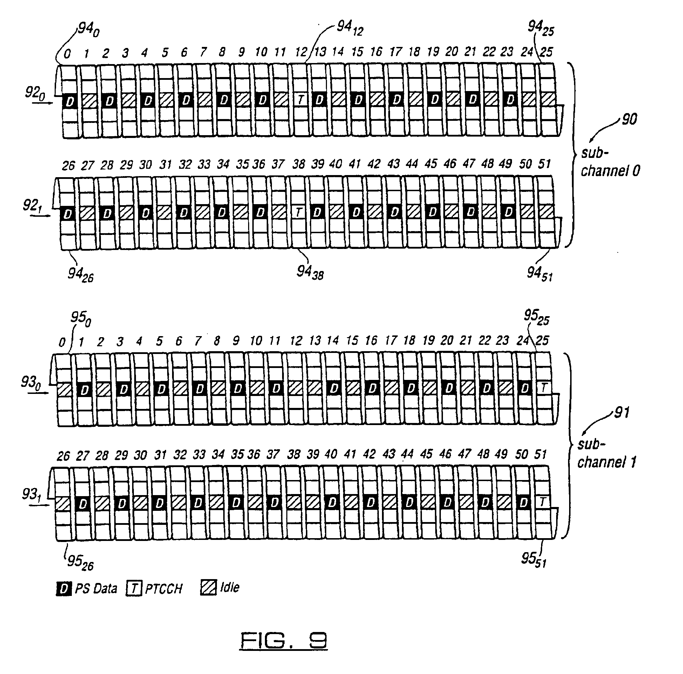

Figure 9 illustrates a half rate packet channel (PCH/H). Two sub-channels 90, 91 are shown each of which is provided via a pair 92_{0,1} and 93_{0,1} of multi-frames. Sub-channel 90 is formed by burst periods D in approximately every other TDMA frame 94₀₋₅₁. Likewise sub-channel 91 is formed via corresponding burst periods D in approximately every other TDMA frame 95₀₋₅₁. The two sub-channels are constructed so that the burst periods in each are offset from one another. Thus TDMA frame 94₀ is used for sub-channel 90, TDMA frame 95₁ is used for sub-channel 91, TDMA frame 94₂ is used for sub-channel 90 and TDMA frame 95₃ is used for sub-channel 91 etc.

The PTCCH is provided for sub-channel 90 in TDMA frames 94₁₂ and 94₃₈. The PTCCH is provided for sub-channel 91 in TDMA frames 95₂₅ and 95₅₁. It will be understood by those skilled in the art that although sub-channels 90 and 91 are shown for illustrative purposes as four separate multi-frames 92_{0,1} and 93_{0,1} they really represent only two interlinked consecutive multi-frames.

Using such a half rate packet channel (PCH/H) allows multiplexing on the same time slot with a half rate circuit switched channel (TCH/H).

Another way to consider a half rate packet channel would be to allocate one every two blocks (for bursts) within a PCH/F. However from the physical layer point of view it would look like a PCH/F and therefore could not be multiplexed with a TCH/H. Packets are mapped by following a granularity of four consecutive bursts. In other words packets can either be four or eight bursts long.

With the above-mentioned full, half and quarter rate channels the following are the possible ways in which channels can be combined onto basic physical channels. Numbers appearing in parentheses after channel designations indicate sub-channel numbers.
i) TCH/F
ii) PCH/F
iii) TCH/H (0) + TCH/H (1)
iv) TCH/H (0) + PCH/H (1)
v) PCH/H (0) + TCH/H (1)
vi) PCH/H (0) + PCH/H (1)
vii) TCH/Q (0) + TCH/Q (1) + TCH/Q (2) + TCH/Q (3)
viii) TCH/Q (0) + TCH/Q (1) + TCH/H (1)
ix) TCH/H (0) + TCH/Q (2) + TCH/Q (3)
x) TCH/Q (0) + TCH/Q (1) + PCH/H (1)
xi) PCH/H (0) + TCH/Q (2) + TCH/Q (3)

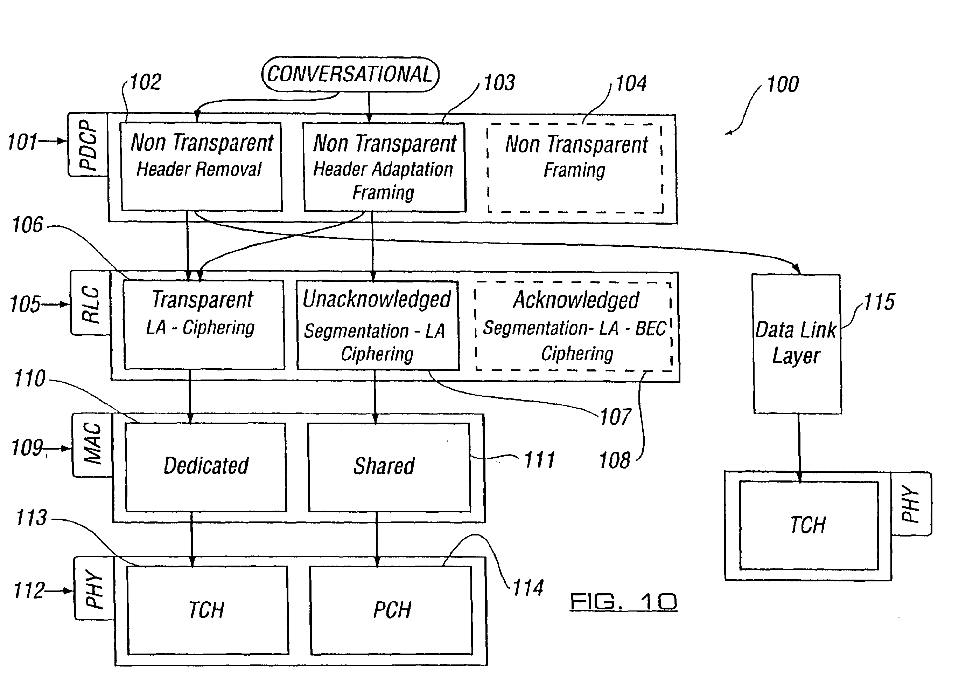

Figure 10 shows how the various modes of a user plane protocol stack suitable for conversational traffic and use with the GERAN are configured. The protocol stack 100 includes a packet data convergence protocol (PDCP) layer which corresponds to the application layer of the well known UMTS stack model and contains three modes 102, 103 and 104 which are non-transparent with header removal, non-transparent with header adaptation and framing and non-transparent with framing respectively. The transparent modes provide error protection only via Forward Error Correction (FEC). On the other hand non-transparent modes provide additional protection via ACK (ACKnowledge mode). The RTP/UDP/IP header can be removed or adapted.

The protocol stack 100 also includes a radio link control (RLC) layer 105 which corresponds to the UMTS stack network layer and includes modes 106, 107 and 108 which are transparent with LA-ciphering, unacknowledged with segmentation, link adaptation (LA) and ciphering and unacknowledged with segmentation, link adaptation (LA), forward error correction (FEC) and ciphering respectively.

The protocol stack also includes a media access control (MAC) layer 109 which includes two modes 110 and 111 which are for dedicated and shared channels respectively. For dedicated channels no user ID is included allowing only one user per channel however when DTX occurs data packets from the same user can be transmitted. In shared mode the same channel can be shared between several users.

The protocol stack also includes a physical layer (PHYS) 112 which includes two modes 113 and 114 which are for circuit switched (TCH) and packet switched channels (PCH) respectively. The physical layer allows for GMSK or 8PSK modulation in order to convert channel coded speech or data into a type suitable for transmission over the radio channel Various channel coding strategies can also be implemented to protect data integrity such as UEP and EEP. Rectangular and diagonal interleaving at a depth of 2, 4, 8 or 19 can also be introduced to aid data integrity.

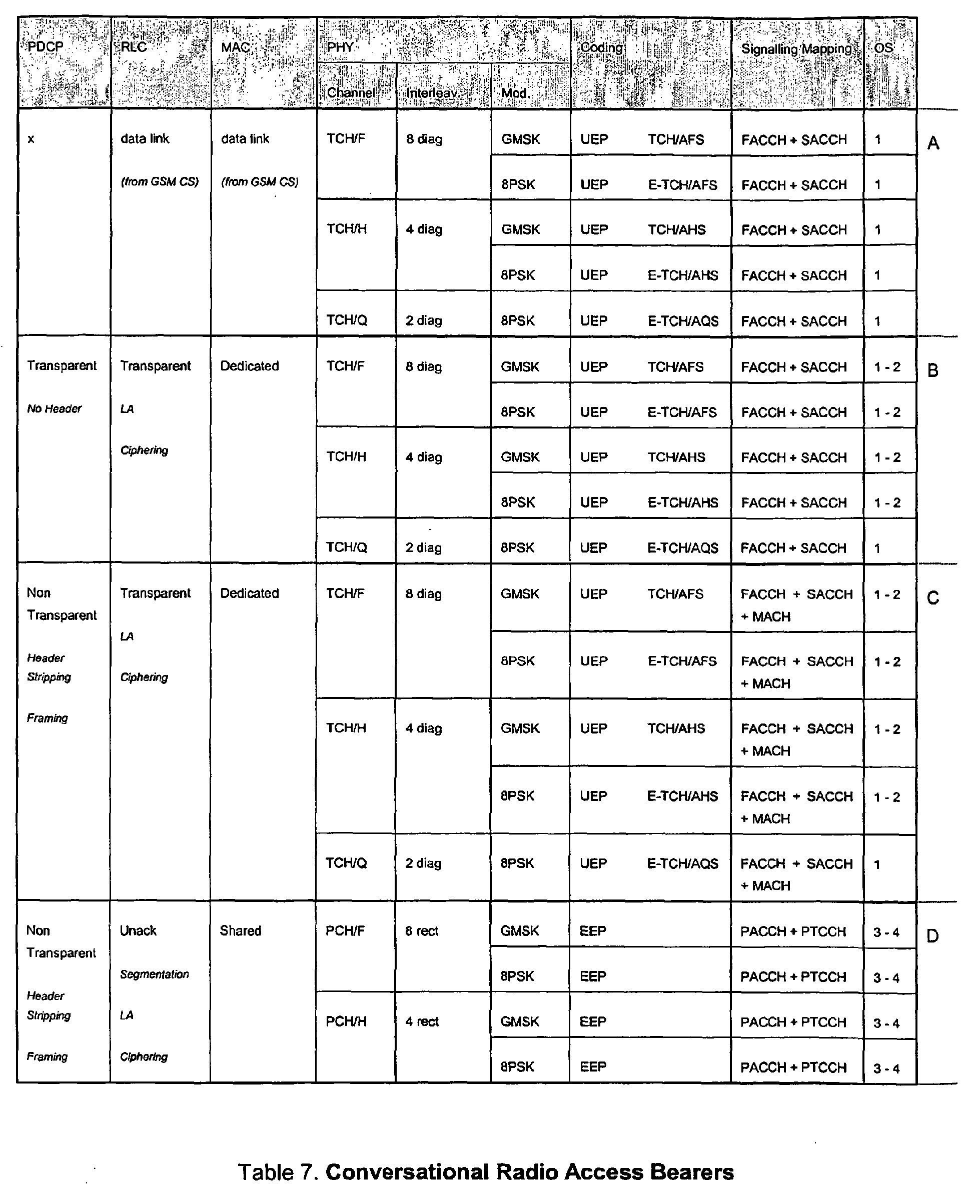

The first radio access bearer A supports operational scenario (OS) 1 which is the permanent allocation of a channel to a voice call (conversational traffic class) without multiplexing capabilities. This provides optimised adaptive multi-write (AMR) speech reusing the data link layer from GSMCS mode. The mapping follows Figures 2, 3 or 4 depending upon the channel rate, i.e. full rate TCH/F, half rate TCH/H or quarter rate TCH/Q. Various coding strategies such as UEP, TCH/AFS, E-TCH/AFS, E-TCH/AHS and E-TCH/AQS can also be provided for. This radio access bearer utilises FACCH and SACCH signalling mapping as described hereinabove.

The second radio access bearer B of Table 1 supports OS1 and also OS2 which is the permanent allocation of a channel to a voice call (conversational traffic class) and multiplexing of best effort data from the same user (background traffic class). This bearer B is provided by using the transparent mode 102 in the PDCP layer 101 with header removal, transparent mode 106 in the RLC layer 105 with link adaptation (LA) and ciphering dedicated mode 110 in the MAC layer 109 and circuit switched mode 113 in the physical layer 112. The bearer provides optimised AMR speech. The coding and signalling are equivalent to the bearer A but the protocol stack is different allowing for the support of OS2 thanks to the MAC layer. The mapping follows Figures 2, 3 or 4 depending upon the channel rate. It is possible to fit best effort data packets from the same user within silent periods.

The third radio access bearer C of Table 6 likewise supports OS1 and OS2. This bearer is provided by using the non-transparent mode 103 in the PDCP layer 101 with header stripping as an adaptation and including framing which includes segmentation and addition of a header. The transparent mode 106 in the RLC layer 105 with LA and ciphering and dedicated mode 110 in the MAC layer 109 are also used. The circuit switched mode 113 is utilised in the physical layer in either full, half or quarter (TCH (F/H/Q)) rate depending upon the channel rate required. The bearer provides optimised AMR speech with header stripping. In addition to SACCH and FACCH control channels the bearer uses an embedded associated control channel (MACH) as described In Finnish Patent application number 20000415 filed on 23.02.2000, which is incorporated herein by reference. The mapping follows Figures 2, 3 or 4 depending upon the channel rate. It is possible to fit best effort data packets from the same user within silent periods.

The fourth radio access bearer D or Table 6 supports OS3 which is the permanent allocation of a channel to a voice call (conversational traffic class) and multiplexing of best effort data from different users. OS4 is also supported which is the allocation of a channel to more than one voice user (and/or data users) in a dynamic manner. The bearer is provided by the non-transparent mode 103 with header stripping and framing from the PDCP layer 101. The unacknowledged mode 107 from the RLC layer 105 is also used which provides segmentation, LA and ciphering. The shared mode 111 from the MAC layer 109 is utilised as is the packet switched mode 114 from the physical layer 112. By configuring the protocol stack in this manner a generic conversational radio access bearer D is produced. The mapping follows the scheme shown in Figures 8 and 9 depending upon the channel rate required. In order to benefit from longer interleaving two speech frames are encapsulated within one radio block.

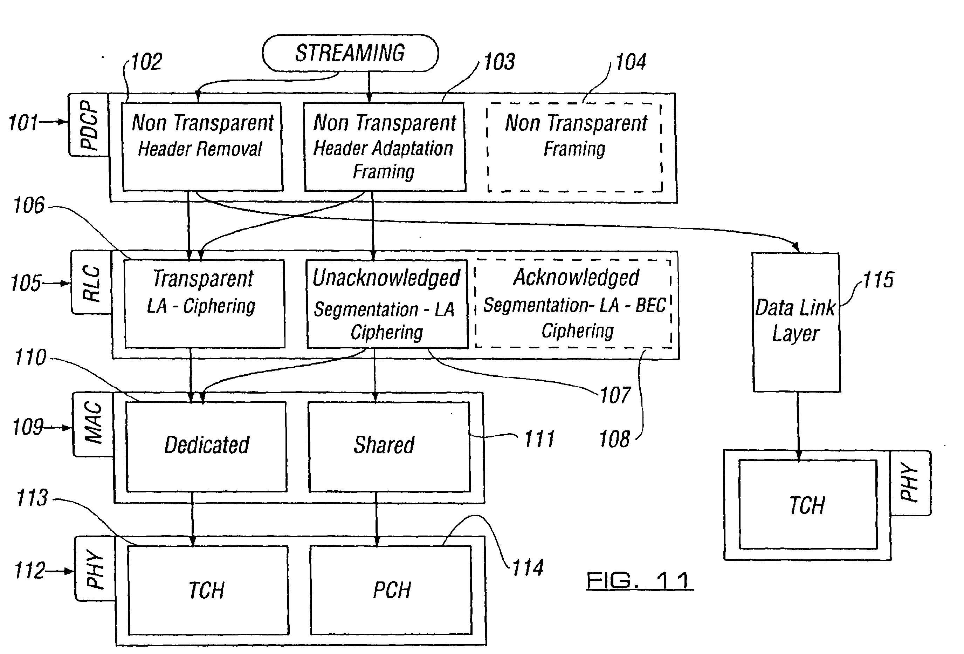

Figure 11 shows the protocol stack 100 for streaming radio access bearers. The protocol stack includes the same modes and layers as those of Figure 10 but the routing and selection of the modes is different. The blocks shown via a dotted line are not used. The data link layer 115 is taken from the GSMCS mode and therefore allows the use of a existing circuit switched data channels. The paths through the protocol stack as indicated by the arrows in Figure 11 are detailed in Table 7. The operational scenarios are not applicable in the context of streaming radio access bearers.

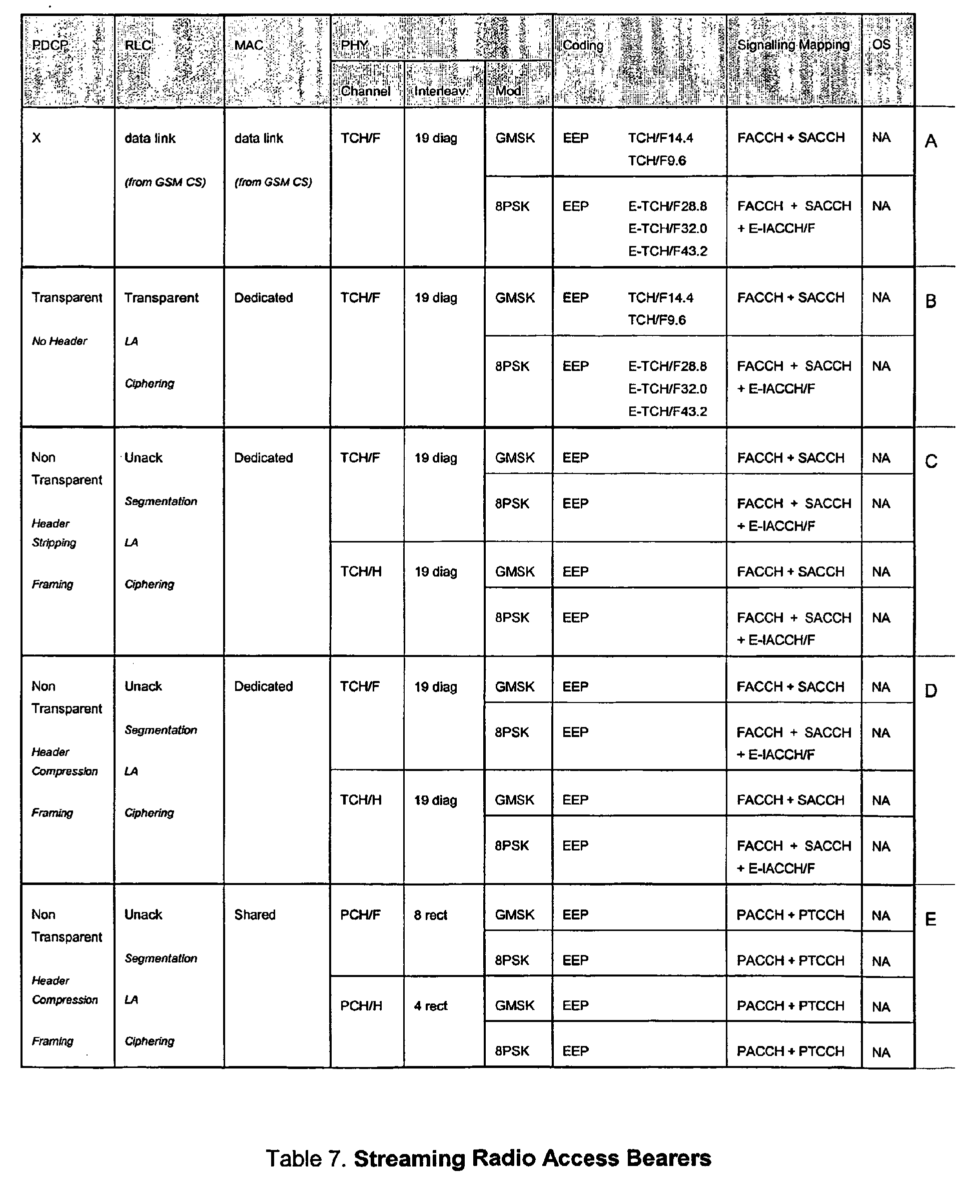

Five radio access bearers A to E are defined for streaming radio access bearers. The first of these labelled A is provided for optimised streaming reusing the data link layer 115 from the GSMCS mode. The bearer A uses depth 19 diagonal interleaving for a full rate circuit switched traffic channel which can be either GMSK or 8PSK modulated. The coding scheme for these two alternatives is different as are the signalling mapping schemes. When GMSK modulation is used FACCH and SACCH control channels are used together with TCH/F14.4 and F9.6 coding This is a traffic channel for data transmission specified in the 05.02 GSM specification. The numbers correspond to the bit rate : 14.4 kbit/s and 9.6 kbit/s respectively. When 8PSK modulation is used on the traffic channel FACCH and SACCH control channels are supported together with E-IACCH/F. These allow for E-TCH/F28.8, 32.0 or 43.2 coding to be used. Here the numbers correspond to the bit rate of each coding scheme, i.e. respectively 28.8kbit/s, 32kbit/s and 43.2 kbit/s. These coding schemes are used for ECSD (Edge Circuit Switched Data service) as equal error protection.

The second streaming radio access bearer B utilises the transparent mode 102 in the PDCP layer 101 of the protocol stack. The transparent mode 106 from the RLC layer 105 is also used together with the dedicated mode 110 in the MAC layer 109. The physical layer 112 is configured to provide circuit switched channels using a depth 19 diagonal interleaving policy. By either using GMSK or 8PSK modulation on the channel to retain data integrity various coding and signalling mapping policies can be implemented as may be seen in Table 7. The coding and signalling is equivalent to A but the protocol stack is different configured. The signal mapping follows Figures 2, 3 and 4 depending upon the channel rate.

The third streaming radio access bearer C utilises the non-transparent mode 103 from the PDCP layer of the protocol stack. Additionally the headers are adapted by stripping and then framing is carried out. The protocol path is then configured to use the unacknowledged mode 107 in the RLC layer 105 including segmentation, LA and ciphering. The dedicated mode 110 from layer 109 is also utilised. Various options are then available for channel operation as set out in Table 7. This provides optimised streaming with header stripping. The mapping follows Figures 2, 3 and 4 depending on channel rate.

The fourth streaming radio access bearer D provides optimised streaming with header compression. Bearer D utilises the non-transparent mode 103 in the PDCP layer of the protocol stack including header compression and framing. The unacknowledged mode 107 is also used from the RLC layer 105 together with segmentation LA and ciphering. The MAC layer 109 is configured to operate in dedicated mode 110 whilst the physical layer 112 is configured to operate in circuit switched mode 113. The various interleaving, modulating, coding and mapping protocols which can be implemented are shown in Table 7.

The fifth streaming radio access bearer E provides an generic streaming radio access bearer. The protocol stack is configured as shown in Table 7 and Figure 11. The non-transparent mode 103 in PDCP layer 101 is selected and is configured for headers compression and framing. The unacknowledged mode 107 is utilised in the RLC layer 105 together with segmentation, LA and ciphering. The shared 111 is used from the MAC layer 109. The packet switched mode 114 is selected from the physical layer. By configuring the protocol stack in this way the various options for traffic channels set out in Table 7 are available. This bearer utilises PACCH and PTCCH control channels as described hereinabove. The mapping follows Figures 2, 3 or 4 depending upon the channel rates. In order to benefit from longer interleaving two speech frames are encapsulated within one packet. However only one data frame can be encapsulated.

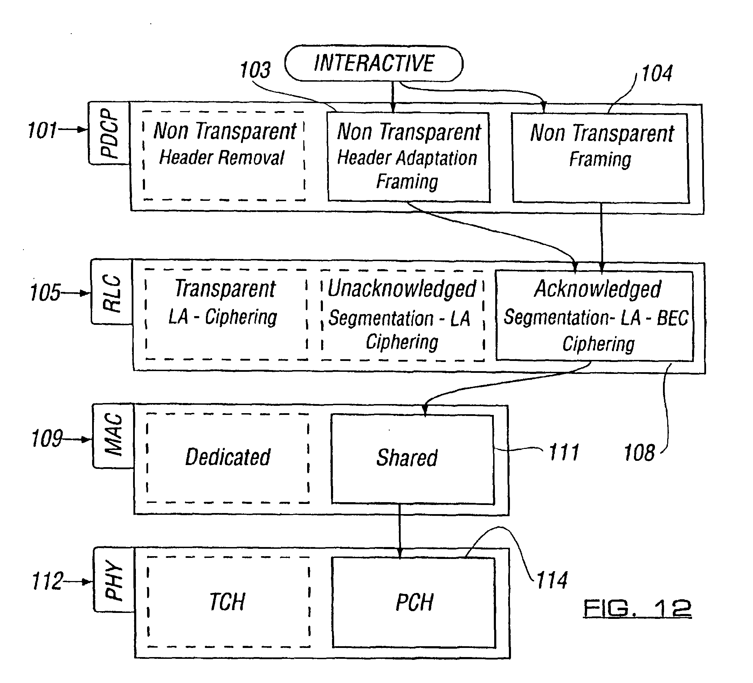

Figure 12 shows the protocol stack for interactive radio access bearers. The protocol stack includes the same modes and layers as those of Figure 10 but the routing and selection of the modes is different as indicated via the arrows which indicate the path of the possible bearers. The blocks or modes shown via a dotted line are not used. The paths indicated by the arrows are detailed in Table 8. Only two radio access bearers are provided and these are labelled A and B.

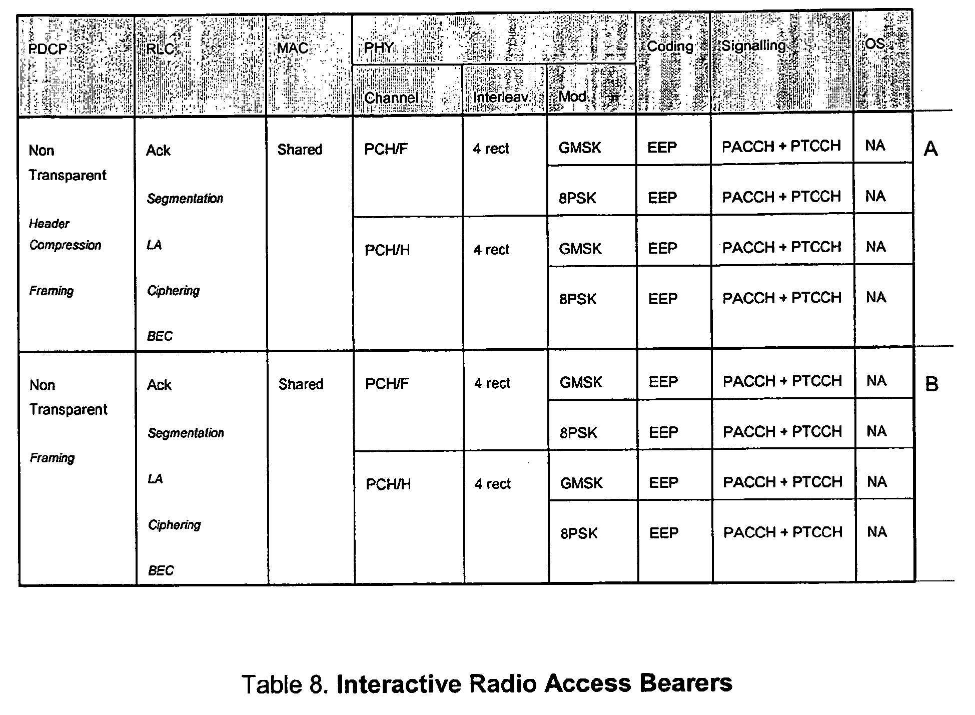

The first of these A is produced via mode 103 of PDCP layer 101, which is a non-transparent mode which adapts the header via compression and framing techniques. The acknowledged mode 108 is chosen from the RLC layer 105 together with segmentation, LA and ciphering and backward error correction (BEC). The shared mode 111 of the MAC layer 109 in the protocol stack is also implemented. Packet switched traffic channels are used with full or half rate channels being used depending upon the channel rate required as shown in Figures 2, 3 or 4. PACCH and PTCCH channels can be used as described hereinabove. The reference to operational scenarios is not relevant to interactive access bearers.

The second interactive bearer B is implemented in a similar manner however the PDCP mode which is adopted does not use header compression. This bearer provides a generic interactive radio access bearer. The channel mapping follows Figures 2, 3 or 4 depending upon the channel rate.

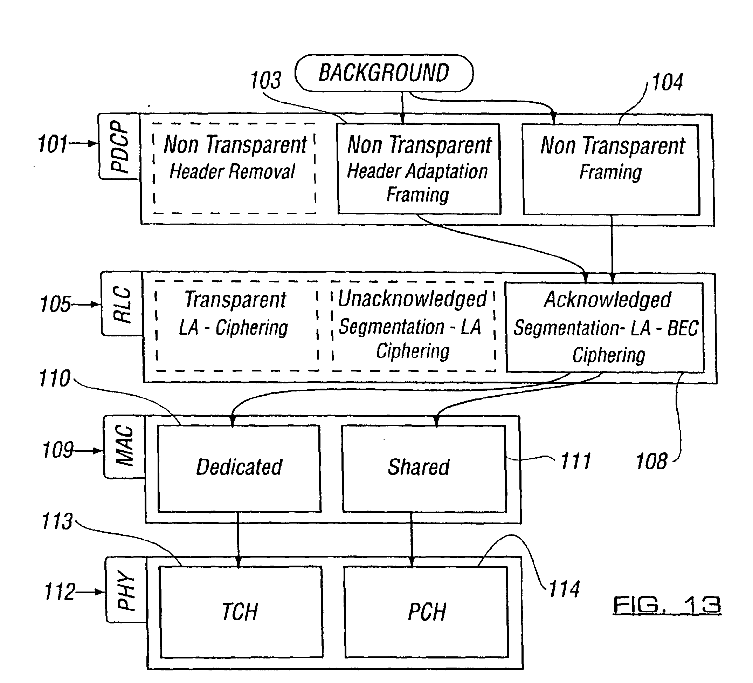

Figure 13 illustrates the protocol stack for background radio access bearers. The protocol stack includes the same modes and layers as those shown in Figures 10, 11 and 12 but utilises different modes of them via a different routing method as shown via the arrows. The blocks shown via a dotted line are not utilised. The paths shown by the arrows in Figure 13 are described in more detail in Table 9. Four background radio access bearers A to D are defined.

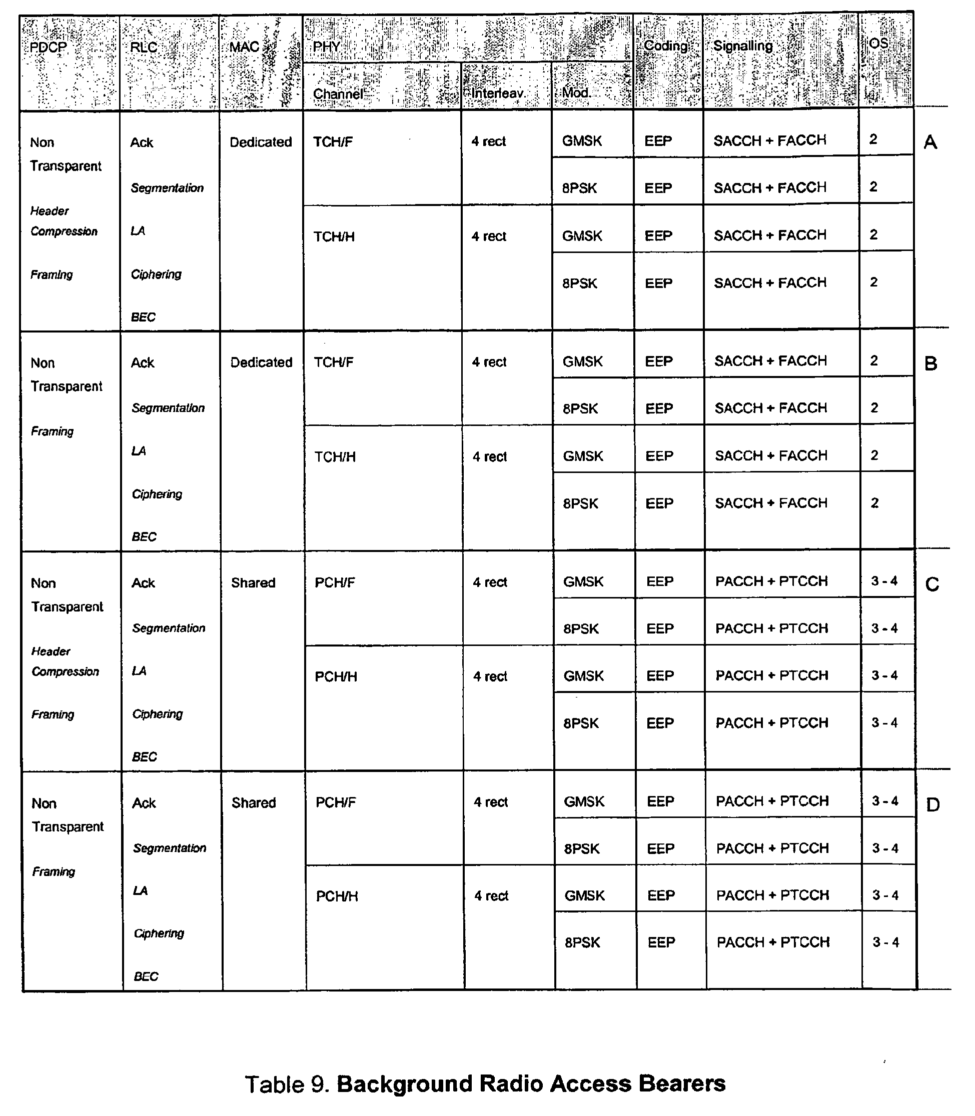

The first of these A of Table 9 is provided by selecting the non-transparent mode 103 from the PDPC layer 101 together with header compression and framing. The RLC layer 105 is configured using the acknowledged mode 108 which allows for segmentation, LA, ciphering and BEC. The MAC layer 109 is implemented using a dedicated channel structure by selecting mode 110. Circuit switched channels are then used by selecting modes TCH. This fulfils OS2 and provides packet transmission within silent periods of the circuit switched channels. Best effort data (or background) with header compression within OS2 is provided. The control associated to the packet data is carried out by the associated control channels of the speech traffic channel (FACCH and SACCH). Best effort data packets are mapped onto four consecutive bursts.

The second background radio access bearer (B of Table 9) is implemented as shown in Table 9 using the non-transparent mode 104, acknowledged mode 108, dedicated mode 110 and circuit switched mode 113. This also provides packet transmission within silent periods but best effort data (or background) without header compression within OS2. The control associated to packet data is carried out by the associated control channels of the speech traffic channel (FACCH and SACCH). Best effort data packets are mapped onto four consecutive bursts.

The third background radio access bearer (C of Table 9) is implemented using the non-transparent mode 103 of PDCP layer 101, the acknowledge mode 108 of RLC layer 105, the shared mode 111 of MAC layer 109 and the packet switched mode 114 of the physical layer 112. The bearer implements OS3 and OS4 and provides a background radio access bearer with header compression.

The fourth background radio access bearer (D of Table 9) provides a generic background radio access bearer. This is implemented using the non-transparent mode 104 of the PDCP layer 101, the acknowledged mode 108 of the RLC layer, the shared mode 111 of the MAC layer 109 and the packet switched mode 114 of the physical layer 112. The mapping follows Figure 2, 3 or 4 depending upon the channel rate and the bearer supports OS3 and OS4.

The possible associated control channels needed for GERAN have now been described. These depend on the kind of traffic channel used over the interface. For packet traffic channels PACCH clearly fulfils the signalling requirements for background and interactive traffic classes. However when conversational and streaming traffic classes are considered the only way to transmit PACCH is to steal voice packets. The influence on voice quality might be reduced. However since TA and PC updates does not use PACCH and since measurement reports can be limited, PACCH traffic could be reduced. Nevertheless it is advantageous to reuse existing circuit switched traffic channels where more efficient associated control has been defined.

For circuit switched traffic channels SACCH and FACCH accommodate the signalling requirements of streaming and conversational traffic classes.

Embodiments of the present invention take place in GERAN which means that the physical layer is mainly connected to the packet switched core network but can also be connected to the circuit switched core network. Previously there has been on the one hand a circuit switched air interface (TCH + SACCH + idle) connected to a circuit switched core network (through the A interface) and on the other hand a packet switched air interface (PDTCH + PTCCH + idle i.e. PDCH) connected to a packet switched core network (through Gb interface). Embodiments of the present invention allow the circuit switched air interface to be connected to a packet switched core network (through Gb or lu-ps interfaces), and allow the circuit switched air interface to support packet data (not only TCH) and therefore to be also connected to a packet switched core network (through Gb or lu-ps interfaces). Thereby one possible combination over the circuit switched air interface will be PDTCH + SACCH + idle. In case of OS2 a possible combination will be TCH + PDTCH + SACCH + idle. Where a communication system according to the present invention can be implemented.

GERAN is used as an example of a system where a communication system according to the present invention can be implemented. The systems and methods described herein according to the invention are not restricted however to those used in GSM or in EDGE; a system or method according to the invention can be applied also in other radio networks.

GERAN is used as an example of a system where a communication system according to the present invention can be implemented.

It will be understood by those skilled in the art that the present invention is not limited to the above examples but rather modifications could be made without departing from the scope of the present invention.

**Annex A - Contents of Associated Control Channels**

| Associated Control Channels | Messages |
|---|---|
| SACCH | Measurement Report - Uplink |
| | System Information Type 5 - Downlink |
| | System Information Type 6 - Downlink |
| | System Information Type 5 bis - Downlink |
| | System Information Type 5 ter - Downlink |
| | Extended Measurement Order - Downlink |
| | Extended measurement report - Uplink |
| | SID frames in case of DTX |
| FACCH | Additional Assignment - downlink |
| | Assignment command - downlink |
| | Assignment complete - uplink |
| | Assignment failure - uplink |
| | Channel mode modify - downlink |
| | Channel mode modify acknowledge - uplink |
| | Channel release - downlink |
| | Ciphering mode command - downlink |
| | Ciphering mode complete - uplink |
| | Classmark change - uplink |
| | Classmark enquiry - downlink |
| | Configuration change command - downlink |
| | Configuration change acknowledge -uplink |
| | Configuration change reject - uplink |
| | Frequency redefinition - downlink |
| | Handover access |
| | Handover command - downlink |
| | Handover complete - uplink |
| | Handover failure - uplink |
| | Notification/FACCH - downlink |
| | RR-Cell Change Order - downlink |
| | Paging response - uplink |
| | Partial release - downlink |
| | Partial release complete - uplink |
| | Physical information - downlink |
| | RR Initialization Request - uplink |
| | Talker indication - uplink |
| | Uplink busy - downlink - VGCS only |
| | Uplink free - downlink - VGCS only |
| | Uplink release - VGCS only |
| PACCH | Packet Access Reject - downlink |
| | Packet Control Acknowledgement - uplink |
| | Packet Cell Change Order - downlink |
| | Packet Cell Change Failure - uplink |
| | Packet Downlink Ack/Nack - uplink |
| | EGPRS Packet Downlink Ack/Nack - uplink |
| | Packet Downlink Assignment - downlink |
| | EGPRS Packet Downlink Assignment - downlink |
| | Packet Downlink Dummy Control Block - downlink |
| | Packet Uplink Dummy Control Block - uplink |
| | Packet Measurement Report - uplink |
| | Packet Measurement Order - downlink |
| | Packet Mobile TBF Status - uplink |
| | Packet Paging Request - downlink |
| | Packet PDCH Release - downlink |
| | Packet Polling Request - downlink |
| | Packet Power Control/Timing Advance - downlink |
| | Packet Resource Request - uplink |
| | EGPRS Packet Resource Request - uplink |
| | EGPRS Packet Resource Request - uplink |
| | Packet System Information Type 1 - downlink |
| | Packet System Information Type 2 - downlink |
| | Packet System Information Type 3 - downlink |
| | Packet System Information Type 3 bis - downlink |
| | Packet System Information Type 4 - downlink |
| | Packet System Information 13 - downlink |
| | Packet TBF Release - downlink |
| | Packet Uplink Ack/Nack - downlink |
| | EGPRS Packet Uplink Ack/Nack - downlink |
| | Packet Uplink Assignment - downlink |
| | EGPRS Packet Uplink Assignment - downlink |
| | Packet Timeslot Reconfigure - downlink |
| | EGPRS Packet Timeslot Reconfigure - downlink |

## Claims

1. A communication system comprising a first station capable of communication with a second station over a wireless channel, data being carried over the wireless channel in superframes (20), each superframe comprising a plurality of frames (21₀₋₂₅) and each frame comprising a plurality of timeslots (22);
the system having a mode of operation in which a data channel for circuit switched communications is defined by the allocation to that channel of corresponding time slots of some of the frames of each superframe, and a data channel for packet switched communications is defined by the allocation to that channel of corresponding time slots of others of the frames of each superframe; **characterised in that**:
the data channel for circuit switched communications is a half rate data channel and the data channel for packet switched communications is a half rate data channel.

2. A communication system as claimed in claim 1, wherein equal numbers of time slots in each frame are allocated to the data channel for circuit switched communications and the data channel for packet switched communications.

3. A communication system as claimed in claim 1, wherein half the number of slots that are allocated to the data channel for packet switched communications are allocated to the data channel for circuit switched communications.

4. A communication system as claimed in claim 1, wherein a quarter of the number of slots that are allocated to the data channel for packet switched communications are allocated to the data channel for circuit switched communications.

5. A communication system as clamed in any preceding claim, wherein control data for control of the data channel for packet switched communications is carried by the data channel for circuit switched communications.

6. A communication system as claimed in any preceding claim, wherein the control data is for control of transmission power and/or handover of the channel.

7. A communication system as claimed in claim 5 or 6, wherein the control data comprises a fast access control channel and/or a slow access control channel.

8. A communication system as claimed in any preceding claim, wherein the data channel for circuit switched communications is a conversational channel.

9. A communication system as claimed in any preceding claim, wherein the data channel for circuit switched communications is a background channel.

10. A communication system as claimed in any preceding claim, wherein the data channel for packet switched communications is allocated time slots during periods when the data channel for circuit switched communications is relatively inactive.

11. A communication system as claimed in claim 10, wherein the data channel for packet switched communications is allocated time slots during lulls in speech data being carried by means of the data channel for circuit switched communications.

12. A communication system as claimed in any preceding claim, wherein the circuit switched channel is capable of operation via a circuit switched core network of the communication system.

13. A communication system as claimed in any preceding claim wherein said system has a mode of operation in which said wireless channel comprises first and second sub-channels;
said first sub-channel comprising the half rate data channel for circuit switched communication; and
said second sub-channel comprises the half rate data channel for packet switched communication.

14. A communication system as claimed in any preceding claim, wherein a half rate data channel is defined by the allocation to that channel of a time slot in alternate frames of the superframe.

15. A mobile station capable of communicating data over a wireless channel, data being carried over the wireless channel in superframes (20), each superframe comprising a plurality of frames (21₀₋₂₅) and each frame comprising a plurality of timeslots (22),
the mobile station being arranged to transmit data for circuit switched communications over a data channel defined by the allocation to that channel of corresponding time slots of some of the frames of each superframe, and to transmit data for packet switched communications over a data channel defined by the allocation to that channelof corresponding time slots of others of the frames of each superframe, **characterised in that** the data channel for circuit switched communications is a half rate data channel and the data channel for packet switched communications is a half rate data channel.

16. A mobile station as claimed in claim 15, wherein the mobile station is arranged to transmit data for packet switched communications during periods when the data channel for circuit switched communications is relatively inactive.

17. A mobile station as claimed in claim 16, wherein the mobile station is arranged to transmit data for packet switched communications during lulls in speech data being carried by means of the data channel for circuit switched communications.

18. A mobile station as claimed in any of claims 15 to 17, wherein the mobile station is arranged to transmit data for circuit switched communication over a first sub-channel that comprises the half rate data channel for circuit switched communication and to transmit data for packet switched communication over a second sub-channel that comprises the half rate data channel for packet switched communication.

19. A base station capable of communicating data over a wireless channel, data being carried over the wireless channel in superframes (20), each superframe comprising a plurality of frames (21₀₋₂₅) and each frame comprising a plurality of timeslots (22),
the base station being arranged to transmit data for circuit switched communications over a data channel defined by the allocation to that channel of corresponding time slots of some of the frames of each superframe, and to transmit data for packet switched communications over a data channel defined by the allocation to that channel of corresponding time slots of others of the frames of each superframe, **characterised in that** the data channel for circuit switched communications is a half rate data channel and the data channel for packet switched communications is a half rate data channel.

20. A base station as claimed in claim 19, wherein the base station is arranged to transmit data for packet switched communications during periods when the data channel for circuit switched communications is relatively inactive.

21. A base station as claimed in claim 20, wherein the base station is arranged to transmit data for packet switched communications during lulls in speech data being carried by means of the data channel for circuit switched communications.

22. A base station as claimed in any of claims 19 to 21, wherein the base station is arranged to transmit data for circuit switched communication over a first sub-channel that comprises the half rate data channel for circuit switched communication and to transmit data for packet switched communication over a second sub-channel that comprises the half rate data channel for packet switched communication.

## Patentansprüche

1. Kommunikationssystem mit einer ersten Station, die zu einer Kommunikation mit einer zweiten Station über einen drahtlosen Kanal fähig ist, wobei Daten über den drahtlosen Kanal in Superrahmen (20) transportiert werden, wobei jeder Superrahmen eine Vielzahl von Rahmen (21₀₋₂₅) aufweist und jeder Rahmen eine Vielzahl von Zeitschlitzen (22) aufweist;
wobei das System eine Betriebsart aufweist, in der ein Datenkanal für schaltungsvermittelte Kommunikationen durch die Zuweisung von entsprechenden Zeitschlitzen von einigen der Rahmen jedes Superrahmens an diesen Kanal definiert wird, und ein Datenkanal für paketvermittelte Kommunikationen durch die Zuweisung von entsprechenden Zeitschlitzen von anderen der Rahmen jedes Superrahmens an diesen Kanal definiert wird; **dadurch gekennzeichnet, dass**
der Datenkanal für schaltungsvermittelte Kommunikationen ein Halbraten-Datenkanal ist und der Datenkanal für paketvermittelte Kommunikationen ein Halbraten-Datenkanal ist.

2. Kommunikationssystem gemäß Anspruch 1, bei dem eine gleiche Anzahl von Zeitschlitzen in jedem Rahmen an den Datenkanal für schaltungsvermittelte Kommunikationen und den Datenkanal für paketvermittelte Kommunikationen zugewiesen wird.

3. Kommunikationssystem gemäß Anspruch 1, bei dem die Hälfte der Anzahl von Schlitzen, die an den Datenkanal für paketvermittelte Kommunikationen zugewiesen werden, an den Datenkanal für schaltungsvermittelte Kommunikationen zugewiesen werden.

4. Kommunikationssystem gemäß Anspruch 1, bei dem ein Viertel der Anzahl von Schlitzen, die an den Datenkanal für paketvermittelte Kommunikationen zugewiesen werden, an den Datenkanal für schaltungsvermittelte Kommunikationen zugewiesen werden.

5. Kommunikationssystem gemäß einem der vorhergehenden Ansprüche, bei dem Steuerdaten zur Steuerung des Datenkanals für paketvermittelte Kommunikationen durch den Datenkanal für schaltungsvermittelte Kommunikationen transportiert werden.

6. Kommunikationssystem gemäß einem der vorhergehenden Ansprüche, bei dem die Steuerdaten zur Steuerung einer Sendeleistung und/oder einer Weiterreichung des Kanals dienen.

7. Kommunikationssystem gemäß Anspruch 5 oder 6, bei dem die Steuerdaten einen schnellen Zugangssteuerkanal und/oder einen langsamen Zugangssteuerkanal aufweisen.

8. Kommunikationssystem gemäß einem der vorhergehenden Ansprüche, bei dem der Datenkanal für schaltungsvermittelte Kommunikationen ein Gesprächskanal ist.

9. Kommunikationssystem gemäß einem der vorhergehenden Ansprüche, bei dem der Datenkanal für schaltungsvermittelte Kommunikationen ein Hintergrundkanal ist.

10. Kommunikationssystem gemäß einem der vorhergehenden Ansprüche, bei dem an den Datenkanal für paketvermittelte Kommunikationen Zeitschlitze während Perioden zugewiesen werden, wenn der Datenkanal für schaltungsvermittelte Kommunikationen relativ inaktiv ist.

11. Kommunikationssystem gemäß Anspruch 10, bei dem an den Datenkanal für paketvermittelte Kommunikationen Zeitschlitze während Pausen in Sprachdaten zugewiesen werden, die mit Hilfe des Datenkanals für schaltungsvermittelte Kommunikationen transportiert werden.

12. Kommunikationssystem gemäß einem der vorhergehenden Ansprüche, bei dem der schaltungsvermittelte Kanal zum Betrieb über ein schaltungsvermitteltes Kernnetzwerk des Kommunikationssystems fähig ist.

13. Kommunikationssystem gemäß einem der vorhergehenden Ansprüche, bei dem das System eine Betriebsart aufweist, in der der drahtlose Kanal einen ersten und einen zweiten Unterkanal aufweist;
wobei der erste Unterkanal den Halbraten-Datenkanal für schaltungsvermittelte Kommunikation aufweist; und
wobei der zweite Unterkanal den Halbraten-Datenkanal für paketvermittelte Kommunikation aufweist.

14. Kommunikationssystem gemäß einem der vorhergehenden Ansprüche, bei dem ein Halbraten-Datenkanal durch die Zuweisung eines Zeitschlitzes in abwechselnden Rahmen des Superrahmens an diesen Kanal definiert wird.

15. Mobilstation, die zum Übertragen von Daten über einen drahtlosen Kanal fähig ist, wobei Daten über den drahtlosen Kanal in Superrahmen (20) transportiert werden, wobei jeder Superrahmen eine Vielzahl von Rahmen (21₀₋₂₅) aufweist und jeder Rahmen eine Vielzahl von Zeitschlitzen (22) aufweist,
wobei die Mobilstation eingerichtet ist, Daten für schaltungsvermittelte Kommunikationen über einen Datenkanal zu übertragen, der durch die Zuweisung von entsprechenden Zeitschlitzen von einigen der Rahmen jedes Superrahmens an diesen Kanal definiert wird, und Daten für paketvermittelte Kommunikationen über einen Datenkanal zu übertragen, der durch die Zuweisung von entsprechenden Zeitschlitzen von anderen der Rahmen jedes Superrahmens an diesen Kanal definiert wird, **dadurch gekennzeichnet, dass** der Datenkanal für schaltungsvermittelte Kommunikationen ein Halbraten-Datenkanal ist und der Datenkanal für paketvermittelte Kommunikationen ein Halbraten-Datenkanal ist.

16. Mobilstation gemäß Anspruch 15, wobei die Mobilstation eingerichtet ist, Daten für paketvermittelte Kommunikationen während Perioden zu übertragen, wenn der Datenkanal für schaltungsvermittelte Kommunikationen relativ inaktiv ist.

17. Mobilstation gemäß Anspruch 16, wobei die Mobilstation eingerichtet ist, Daten für paketvermittelte Kommunikationen während Pausen in Sprachdaten zu übertragen, die mit Hilfe des Datenkanals für schaltungsvermittelte Kommunikationen transportiert werden.

18. Mobilstation gemäß einem der Ansprüche 15 bis 17, wobei die Mobilstation eingerichtet ist, Daten für eine schaltungsvermittelte Kommunikation über einen ersten Unterkanal zu übertragen, der den Halbraten-Datenkanal für eine schaltungsvermittelte Kommunikation aufweist, und Daten für eine paketvermittelte Kommunikation über einen zweiten Unterkanal zu übertragen, der den Halbraten-Datenkanal für eine paketvermittelte Kommunikation aufweist.

19. Basisstation, die zum Übertragen von Daten über einen drahtlosen Kanal fähig ist, wobei Daten über den drahtlosen Kanal in Superrahmen (20) transportiert werden, wobei jeder Superrahmen eine Vielzahl von Rahmen (21₀₋₂₅) aufweist und jeder Rahmen eine Vielzahl von Zeitschlitzen (22) aufweist,
wobei die Basisstation eingerichtet ist, Daten für schaltungsvermittelte Kommunikationen über einen Datenkanal zu übertragen, der durch die Zuweisung von entsprechenden Zeitschlitzen von einigen der Rahmen jedes Superrahmens an diesen Kanal definiert wird, und Daten für paketvermittelte Kommunikationen über einen Datenkanal zu übertragen, der durch die Zuweisung von entsprechenden Zeitschlitzen von anderen der Rahmen jedes Superrahmens an diesen Kanal definiert wird, **dadurch gekennzeichnet, dass** der Datenkanal für schaltungsvermittelte Kommunikationen ein Halbraten-Datenkanal ist und der Datenkanal für paketvermittelte Kommunikationen ein Halbraten-Datenkanal ist.

20. Basisstation gemäß Anspruch 19, wobei die Basisstation eingerichtet ist, Daten für paketvermittelte Kommunikationen während Perioden zu übertragen, wenn der Datenkanal für schaltungsvermittelte Kommunikationen relativ inaktiv ist.

21. Basisstation gemäß Anspruch 20, wobei die Basisstation eingerichtet ist, Daten für paketvermittelte Kommunikationen während Pausen in Sprachdaten zu übertragen, die mit Hilfe des Datenkanals für schaltungsvermittelte Kommunikationen transportiert werden.

22. Basisstation gemäß einem der Ansprüche 19 bis 21, wobei die Basisstation eingerichtet ist, Daten für eine schaltungsvermittelte Kommunikation über einen ersten Unterkanal zu übertragen, der den Halbraten-Datenkanal für eine schaltungsvermittelte Kommunikation aufweist, und Daten für eine paketvermittelte Kommunikation über einen zweiten Unterkanal zu übertragen, der den Halbraten-Datenkanal für eine paketvermittelte Kommunikation aufweist.

## Revendications

1. Système de communication comprenant une première station qui est apte à communiquer avec une deuxième station par le biais d'un canal sans fil, des données étant véhiculées sur le canal sans fil à l'intérieur de super trames (20), chaque super trame comprenant une pluralité de trames (21₀₋₂₅) et chaque trame comprenant une pluralité de tranches de temps (22) ;
le système ayant un mode de fonctionnement dans lequel un canal de données servant à des communications à commutation de circuits est défini par l'allocation à ce canal de tranches de temps correspondantes parmi certaines des trames de chaque super trame, et un canal de données servant à des communications à commutation de paquets est défini par l'allocation à ce canal de tranches de temps correspondantes parmi les autres trames de chaque super trame ; **caractérisé en ce que** :
le canal de données servant à des communications à commutation de circuits est un canal de données à demi débit, et le canal de données servant à des communications à commutation de paquets est un canal de données à demi débit.

2. Système de communication selon la revendication 1, dans lequel, dans chaque trame, les mêmes nombres de tranches de temps sont alloués au canal de données servant à des communications à commutation de circuits et au canal de données servant à des communications à commutation de paquets.

3. Système de communication selon la revendication 1, dans lequel la moitié du nombre de tranches de temps qui sont allouées au canal de données servant à des communications à commutation de paquets est allouée au canal de données servant à des communications à commutation de circuits.

4. Système de communication selon la revendication 1, dans lequel un quart du nombre de tranches de temps qui sont allouées au canal de données servant à des communications à commutation de paquets est alloué au canal de données servant à des communications à commutation de circuits.

5. Système de communication selon l'une quelconque des revendications précédentes, dans lequel des données de commande servant à commander le canal de données servant à des communications à commutation de paquets sont véhiculées par le canal de données servant à des communications à commutation de circuits.

6. Système de communication selon l'une quelconque des revendications précédentes, dans lequel les données de commande servent à commander une puissance de transmission et / ou un transfert intercellulaire du canal.

7. Système de communication selon la revendication 5 ou 6, dans lequel les données de commande comprennent un canal de commande d'accès rapide et / ou un canal de commande d'accès lent.

8. Système de communication selon l'une quelconque des revendications précédentes, dans lequel le canal de données servant à des communications à commutation de circuits est un canal de conversation.

9. Système de communication selon l'une quelconque des revendications précédentes, dans lequel le canal de données servant à des communications à commutation de circuits est un canal d'amont.

10. Système de communication selon l'une quelconque des revendications précédentes, dans lequel le canal de données servant à des communications à commutation de paquets a des tranches de temps qui lui sont allouées pendant des périodes où le canal de données servant à des communications à commutation de circuits est relativement inactif.

11. Système de communication selon la revendication 10, dans lequel le canal de données servant à des communications à commutation de paquets a des tranches de temps qui lui sont allouées pendant des accalmies dans les données de parole qui sont véhiculées au moyen du canal de données servant à des communications à commutation de circuits.

12. Système de communication selon l'une quelconque des revendications précédentes, dans lequel le canal de données servant à des communications à commutation de circuits est apte à fonctionner par le biais d'un coeur de réseau à commutation de circuits du système de communication.

13. Système de communication selon l'une quelconque des revendications précédentes, dans lequel ledit système a un mode de fonctionnement dans lequel ledit canal sans fil comprend des premier et deuxième sous-canaux ;
ledit premier sous-canal comprenant le canal de données à demi débit servant à des communications à commutation de circuits ; et
ledit deuxième sous-canal comprenant le canal de données à demi débit servant à des communications à commutation de paquets.

14. Système de communication selon l'une quelconque des revendications précédentes, dans lequel un canal de données à demi débit est défini par l'allocation à ce canal d'une tranche de temps à l'intérieur de trames alternées de la super trame.

15. Station mobile, qui est apte à communiquer des données sur un canal sans fil, des données étant véhiculées sur le canal sans fil à l'intérieur de super trames (20), chaque super trame comprenant une pluralité de trames (21₀₋₂₅), et chaque trame comprenant une pluralité de tranches de temps (22),
la station mobile étant configurée pour transmettre des données servant à des communications à commutation de circuits sur un canal de données défini par l'allocation à ce canal de tranches de temps correspondantes parmi certaines des trames de chaque super trame, et pour transmettre des données servant à des communications à commutation de paquets sur un canal de données défini par l'allocation à ce canal de tranches de temps correspondantes parmi les autres trames de chaque super trame, **caractérisée en ce que** le canal de données servant à des communications à commutation de circuits est un canal de données à demi débit, et le canal de données servant à des communications à commutation de paquets est un canal de données à demi débit.

16. Station mobile selon la revendication 15, dans laquelle la station mobile est configurée pour transmettre des données servant à des communications à commutation de paquets pendant des périodes où le canal de données servant à des communications à commutation de circuits est relativement inactif.

17. Station mobile selon la revendication 16, dans laquelle la station mobile est configurée pour transmettre des données servant à des communications à commutation de paquets pendant des accalmies dans les données de parole qui sont véhiculées au moyen du canal de données servant à des communications à commutation de circuits.

18. Station mobile selon l'une quelconque des revendications 15 à 17, dans laquelle la station mobile est configurée pour transmettre des données servant à des communications à commutation de circuits sur un premier sous-canal qui comprend le canal de données à demi débit servant à des communications à commutation de circuits, et pour transmettre des données servant à des communications à commutation de paquets sur un deuxième sous-canal qui comprend le canal de données à demi débit servant à des communications à commutation de paquets.

19. Station de base, qui est apte à communiquer des données sur un canal sans fil, des données étant véhiculées sur le canal sans fil à l'intérieur de super trames (20), chaque super trame comprenant une pluralité de trames (21₀₋₂₅), et chaque trame comprenant une pluralité de tranches de temps (22),
la station de base étant configurée pour transmettre des données servant à des communications à commutation de circuits sur un canal de données défini par l'allocation à ce canal de tranches de temps correspondantes parmi certaines des trames de chaque super trame, et pour transmettre des données servant à des communications à commutation de paquets sur un canal de données défini par l'allocation à ce canal de tranches de temps correspondantes parmi les autres trames de chaque super trame, **caractérisée en ce que** le canal de données servant à des communications à commutation de circuits est un canal de données à demi débit, et le canal de données servant à des communications à commutation de paquets est un canal de données à demi débit.

20. Station de base selon la revendication 19, dans laquelle la station de base est configurée pour transmettre des données servant à des communications à commutation de paquets pendant des périodes où le canal de données servant à des communications à commutation de circuits est relativement inactif.

21. Station de base selon la revendication 20, dans laquelle la station de base est configurée pour transmettre des données servant à des communications à commutation de paquets pendant des accalmies dans les données de parole qui sont véhiculées au moyen du canal de données servant à des communications à commutation de circuits.

22. Station de base selon l'une quelconque des revendications 19 à 21, dans laquelle la station de base est configurée pour transmettre des données servant à des communications à commutation de circuits sur un premier sous-canal qui comprend le canal de données à demi débit servant à des communications à commutation de circuits, et pour transmettre des données servant à des communications à commutation de paquets sur un deuxième sous-canal qui comprend le canal de données à demi débit servant à des communications à commutation de paquets.
